# EUROPEAN PATENT SPECIFICATION

(11) **EP 4 064 249 B1**
(45) Date of publication and mention of the grant of the patent: **25.06.2025**
(21) Application number: 21164979.3
(22) Date of filing: 25.03.2021
(51) Int. Cl.: G09B 23/32, G09B 23/28

(54) **A TRAINING MANIKIN**
TRAININGSPUPPE
MANNEQUIN DE FORMATION

(43) Date of publication of application: 28.09.2022
(73) Proprietor: Ambu A/S, 2750 Ballerup (DK)
(72) Inventor: STØRUP, Martin Lund, 2750 Ballerup (DK); SACHS, Fabian, 2750 Ballerup (DK); POULSEN, Alex Kristian, 2750 Ballerup (DK); HOLTEN-LUND, Hans Erik, 2750 Ballerup (DK); WARD, Christian Paul, 2750 Ballerup (DK)
(74) Representative: COPA Copenhagen Patents

(56) References cited:
- EP-A1- 3 370 220
- WO-A1-2017/029398
- WO-A1-2017/140317
- DE-A1- 102019 117 441
- US-A1- 2004 058 305
- US-A1- 2010 021 876

## Description

The present disclosure relates to a training manikin for practicing cardiopulmonary resuscitation (CPR), more specifically to a method and components allowing registration and transfer of parameters to and from the manikin, such as training parameters, e.g. related to ventilations and/or compressions.

### BACKGROUND

Training manikins having sensors to measure CPR performance, such as ventilation volume and compression depth and frequency are presently known. However, it is desired to provide alternative and/or improved solutions for registering performance of a trainee using a training manikin.

EP 3 370 220 A1 discloses a system and a computer program product for the formative testing of cardiopulmonary resuscitation skills. The system comprises a sensor cluster for installation in a manikin comprising a chest plate and a lung. The sensor cluster comprises a distance sensor for measuring chest plate displacement and a pressure pad for measuring external pressure applied to the manikin and for measuring pressure due to expansion of the lung.

WO 2017/029398 A1 discloses a system for measuring chest compressions in a manikin, especially a manikin for CPR training, comprising an optical proximity sensor and a reflector, one of which being in the back part of the manikin and the other on the chest part opposite each other for measuring the movement between them.

US 2010/021876 A1 discloses a CPR training mannequin including a humanoid torso. The torso is composed of a material having a degree of transparency. A humanoid head is connected to the torso and has a mouth opening connected to a ventilation tube within the head. The torso is supported by resilient elements from the base to simulate resistance to chest compressions. A simulated heart and simulated lungs are arranged within the torso and are visible through the front surface of the torso. Sensors measure the air flow during CPR ventilation and depth of CPR chest compressions. Lights within the heart, brain and lungs indicate the chest compressions and ventilation are adequate to resuscitate the simulated victim.

### SUMMARY

It is an object of the present disclosure to provide a solution, which at least improve the solutions of the prior art and/or provide alternatives to the prior art.

Thus, the present disclosure relates to a training manikin for practicing CPR, and to a method for registering performance of a trainee during practice of CPR. Also, methods for retrofitting a sensor system on a training manikin are disclosed.

The training manikin comprises a chest portion and a back portion. The chest portion is deflectable along a deflection direction and towards the back portion between a non-deflected chest position and a maximum-deflected chest position.

The training manikin comprises one or more sensors for measuring one or more parameters indicative of the performance of a trainee during use of the training manikin in a training session, wherein at least part of the one or more parameters are indicative of deflection of the chest portion.

The training manikin comprises at least one processing device connected to the one or more sensors and adapted to obtain and/or provide one or more output signals based on the one or more parameters. The one or more output signals comprises a compression signal indicative of deflection of the chest portion. For example, the compression signal may be indicative of distance of deflection of the chest portion relative to the non-deflected chest position.

The method for registering performance of a trainee during practice of CPR comprises providing a training manikin, such as the training manikin disclosed herein. For example, wherein the training comprises a chest portion and a back portion, and wherein the chest portion is deflectable along a deflection direction and towards the back portion between a non-deflected chest position and a maximum-deflected chest position, wherein the training manikin further comprises one or more sensors for measuring one or more parameters indicative of the performance of a trainee during use of the training manikin in a training session, and wherein at least part of the one or more parameters are indicative of deflection of the chest portion.

The method comprises: starting a training session, measuring the one or more parameters with the one or more sensors during the training session, and providing a compression signal indicative of deflection of the chest portion based on the one or more parameters.

The deflection direction may generally be perpendicular to the back portion of the manikin, e.g. when the manikin is positioned on a floor, the deflection direction may be perpendicular to the ground.

Measuring the one or more parameters may be performed at a sample rate and/or the one or more parameters may be provided at the sample rate. The sample rate may be between 20-2000 Hz, such as between 100-1000 Hz, such as 100 Hz, 500 Hz or 1000 Hz. In some examples the sample rate may be variable. The sample rate may be different for different sensors.

Measuring the one or more parameters may include measuring an internal chest distance. The compression signal may be based on the measured internal chest distance. For example, the one or more sensors may comprise an optical distance sensor (e.g. a Time of Flight (ToF) sensor) arranged at a sensor position and may measure an internal chest distance between the optical distance sensor and a reflector. The optical distance sensor may be attached to the back portion. The reflector may move with the chest portion during deflection of the chest portion. The sensor position may be stationary, e.g. relative to the back portion, e.g. during deflection of the chest portion. Alternatively, the optical distance sensor may be attached to the chest portion. The sensor position may be movable with the chest portion. The reflector may be stationary, e.g. relative to the back portion, e.g. during deflection of the chest portion.

The optical distance sensor may provide a distance sensor signal indicative of the measured internal chest distance to the processing device. The distance sensor signal may have a sample rate between 50-200 Hz, such as 100 Hz. The compression signal may be based on the distance sensor signal, e.g. the processing device may obtain the compression signal based on the distance sensor signal.

The training manikin may comprise an internal block element. The internal block element may be a resilient material, such as foam. The internal block element may bias the chest portion towards the non-deflected chest position.

The internal block element may have a hole therethrough from a first block side to a second block side. The internal block element may be arranged between the sensor position and the reflector. The hole may be arranged to provide a visible path between the optical distance sensor and the reflector. The first block side may be arranged towards the sensor position and/or the second block side may be arranged towards the reflector. The internal block element may be enclosed by a cover element. The cover element may have an opening exposing the hole of the internal block element on the first block side. The cover element may cover the hole of the internal block element on the second block side. The cover element may form the reflector. The cover element may comprise a reinforcement part covering the hole of the internal block element on the second block side. The cover element may have an increased thickness covering the hole forming the reinforcement part. Alternatively or additionally, the cover element may comprise an additional layer of material (e.g. the same or a different material than the remainder of the cover element) covering the hole forming the reinforcement part.

Alternatively or additionally, the training manikin may comprise a compression spring biasing the chest portion towards the non-deflected chest position. The chest portion may comprise an internal chest support structure in engagement with the compression spring. The internal chest support structure may form the reflector. Alternatively, the reflector may be attached to the internal chest support structure and may extend lateral from the internal chest support structure.

The reflector may be hingedly attached to the internal chest support structure, e.g. to allow rotation of the reflector around a hinge axis perpendicular to the deflection direction. The reflector may be rotatable between a first reflector position and a second reflector position. The reflector may, in the first reflector position, be substantially perpendicular to the deflection direction. The reflector may, in the second reflector position, be substantially parallel with the deflection direction. The reflector may be biased towards the first reflector position, e.g. by a torsion spring.

The measured internal chest distance may be filtered, e.g. by applying one or more filters, e.g. one or more finite impulse response (FIR) filters, e.g. Savitzky Golay filter(s), to obtain a filtered internal chest distance. For example, the processing device may be adapted to filter the distance sensor signal, e.g. by applying one or more filters, e.g. one or more finite impulse response (FIR) filters, e.g. Savitzky Golay filter(s), to obtain a filtered distance signal. The compression signal may be based on the filtered internal chest distance. The processing device may be adapted to obtain and/or provide the compression signal based on the filtered distance signal.

Filtering the measured internal chest distance and/or the distance sensor signal may comprise determining a rate of change of the internal chest distance and/or the distance sensor signal. The rate of change of the internal chest distance and/or the distance sensor signal may be performed by using a 1^{st} derivative filter, such as a 1^{st} derivative Savitzky-Golay filter.

In accordance with the rate of change of the internal chest distance and/or the distance sensor signal being above a high threshold (e.g. 100 mm/sec), a first filter may be applied on the measured internal chest distance and/or the distance sensor signal. The first filter may be based on a first number of sampling points of the measured internal chest distance and/or the distance sensor signal.

In accordance with the rate of change of the internal chest distance and/or the distance sensor signal being below a low threshold (e.g. 20 mm/sec), a second filter may be applied on the measured internal chest distance and/or the distance sensor signal. The second filter may be based on a second number of sampling points of the measured internal chest distance and/or the distance sensor signal. The second number of sampling points may be more than the first number of sampling points. For example, the first number of sampling points may be between 20-30, such as 25. The second number of sampling points may be between 10-20, such as 15.

In accordance with the rate of change of the internal chest distance being below the high threshold and above the low threshold, a combination of both the first filter and the second filter may be applied on the measured internal chest distance and/or the distance sensor signal.

The training manikin may comprise a mouth and/or nostrils and a lung portion. The lung portion may comprise a lung bag and one or more airway components fluidly connecting the lung bag with the mouth and/or the nostrils. The one or more airway components may comprise an airway tube, a lung adaptor and/or a mouth adaptor. At least part of the one or more parameters may be indicative of ventilation of the lung portion. The one or more output signals may comprise a ventilation signal indicative of ventilation of the lung portion. The ventilation signal may be provided. The ventilation signal may be indicative of volume of air contained in the lung portion and/or administered to the lung portion.

Measuring the one or more parameters may include measuring air pressure in the lung portion. The one or more sensors may comprise a pressure sensor measuring air pressure in the lung portion.

The pressure sensor may provide a pressure sensor signal indicative of the measured air pressure in the lung portion to the processing device. The ventilation signal may be based on the measured air pressure in the lung portion and/or the pressure sensor signal. The pressure sensor may be fluidly connected with a sensor tube to a side port of the one or more airway components. The airway tube of the one or more airway components may comprise the side port. The airway tube may comprise a first airway tube part and a second airway tube part. The airway tube may further comprise a side port adapter inserted between the first airway tube part and the second airway tube part. The side port adapter may comprise the side port.

Measuring the one or more parameters may include measuring air pressure outside the lung portion. The one or more sensors may comprise an ambient pressure sensor measuring air pressure outside the lung portion. The ambient pressure sensor may provide an ambient pressure sensor signal indicative of the measured air pressure outside the lung portion to the processing device. The ventilation signal may be based on the measured air pressure outside the lung portion and/or the ambient pressure sensor signal. For example, the ventilation signal may be based on the difference between the air pressure outside the lung portion and the air pressure in the lung portion.

Measuring the one or more parameters includes measuring temperature. The temperature may be measured within the manikin and/or in the vicinity of the manikin. temperature may be measured inside the lung portion, and/or outside the lung portion. The one or more sensors may comprise a temperature sensor measuring temperature, e.g. within the manikin and/or in the vicinity of the manikin, inside the lung portion and/or outside the lung portion. The temperature sensor may provide a temperature sensor signal indicative of the measured temperature to the processing device. The ventilation signal is based on the measured temperature and/or the temperature sensor signal.

The ventilation signal may be based on a rate of change of the one or more measured air pressure parameters of the one or more parameters. For example, the ventilation signal may be based on a rate of change of the measured air pressure in the lung portion and/or the pressure sensor signal, e.g. in combination with the measured air pressure outside the lung portion and/or the ambient pressure sensor signal. The rate of change of the measured air pressure(s) may be performed by using a 1st derivative filter, such as a 1st derivative Savitzky-Golay filter.

The ventilation signal may be based on a rise time of the one or more measured air pressure parameters of the one or more parameters, e.g. the time since the one or more measured air pressure parameters were at a baseline value. For example, the ventilation signal may be based on a rise time of the measured air pressure in the lung portion and/or the pressure sensor signal, e.g. in combination with the measured air pressure outside the lung portion and/or the ambient pressure sensor signal. The rise time of the measured air pressure(s) may be determined based on values of a 1^{st} derivative filter, such as a 1^{st} derivative Savitzky-Golay filter of the measured air pressure(s).

The ventilation signal may be based on a conversion of one or more measured air pressure parameters of the one or more parameters. For example, the ventilation signal may be based on a conversion of the measured air pressure in the lung portion and/or the pressure sensor signal, e.g. in combination with the measured air pressure outside the lung portion and/or the ambient pressure sensor signal. For example, the ventilation signal may be based on a conversion of the difference between the air pressure outside the lung portion and the air pressure in the lung portion. The conversion may use an n^{th} order polynomial equation. "n" may be between 1 and 5, such as between 2 and 4, such as 3. For example, the conversion may use a 1^{st} order, a 2^{nd} order, a 3^{rd} order, a 4^{th} order, or a 5^{th} order polynomial equation and/or a look-up table of values derived from such polynomial equation. The n^{th} order polynomial equation may be empirically established by inflating lung portions of a plurality of manikins of the same type as the training manikin with a known volume of air, e.g. at various temperatures and/or with varying rate of change, and measuring the resulting pressure. Alternatively or additionally, the ventilation signal may be based on a conversion using a look-up table of values derived from inflating lung portions of a plurality of manikins of the same type as the training manikin with a known volume of air, e.g. at various temperatures and/or with varying rate of change, and measuring the resulting pressure. The ventilation signal may be obtained by retrieving, from the look-up table, one or more values corresponding to the measured air pressure(s), e.g. in combination with a rate of change and/or rise time of the measured air pressure(s), to thereby obtain the ventilation signal. Obtaining the ventilation signal may include interpolation between the retrieved one or more values from the look-up table, e.g. using linear or barycentric interpolation.

The training manikin may comprise an electronic memory. The electronic memory may be connected with the at least one processing device. The electronic memory may store one or more variables to be used in converting the measured internal chest distance and/or the distance sensor signal to the compression signal. The electronic memory may store one or more variables to be used in converting the measured air pressure parameters, and optionally rate of change, rise time and/or temperature, to the ventilation signal. For example, the electronic memory may store a type parameter. The type parameter may be indicative of a first type of training manikin selected from a plurality of types of training manikins. The compression signal and/or the ventilation signal may be based on the type parameter.

The compression signal may be based on a compression baseline value. The compression baseline value may be based on measurement of at least part of the one or more parameters, e.g. the internal chest distance/distance sensor signal, during a compression baseline period. For example, the at least part of the one or more parameters, such as the internal chest distance and/or the distance sensor signal, may be measured with the one or more sensors during the compression baseline period to obtain a compression baseline value. The compression baseline period may be before the starting of the training session. The compression baseline period may be a predetermined period, e.g. 3 seconds, e.g. at the beginning of a session and/or in between compressions.

The ventilation signal may be based on a ventilation baseline value. The ventilation baseline value may be based on measurement of at least part of the one or more parameters, e.g. the air pressure in the lung portion/pressure sensor signal and/or the air pressure outside the lung portion/ambient pressure sensor signal, during a ventilation baseline period. For example, the at least part of the one or more parameters, such as the air pressure in the lung portion, the pressure sensor signal, the air pressure outside the lung portion and/or the ambient pressure sensor signal, may be measured with the one or more sensors during the ventilation baseline period to obtain a ventilation baseline value. The ventilation baseline period may be before the starting of the training session. The ventilation baseline period may be a predetermined period, e.g. 3 seconds, e.g. at the beginning of a session and/or in between ventilations. The ventilation baseline period and the compression baseline period may be the same period. The ventilation baseline value and the compression baseline value may be based on measurements during the same period.

The at least one processing device may comprise a first processing device and a second processing device. For example, the first processing device may be adapted to obtain and/or provide the compression signal, and the second processing device may be adapted to obtain and/or provide the ventilation signal.

The one or more output signals, such as the compression signal and/or the ventilation signal, may be provided to a display, e.g. of the manikin, for being displayed. Alternatively or additionally, the one or more output signals, such as the compression signal and/or the ventilation signal, may be provided to a connected device, e.g. via wireless communication. For example, the training manikin may comprise a wireless communication module for communicating with one or more connected devices.

The training manikin may comprise a battery holder, e.g. being electrically connected to the one or more sensors and/or the at least one processing device. The battery holder may comprise a battery compartment adapted to receive one or more batteries. The battery holder may have a first side and a second side opposite the first side. The battery holder may comprise a removable cover portion to close the battery compartment to the outside. The cover portion may form part of the first side of the battery holder. The battery holder may comprise an on/off actuator adapted to connect and disconnect an electrical connection between the one or more batteries in the battery compartment and the one or more sensors and/or the at least one processing device. The on/off actuator may be arranged on the first side of the battery holder.

The back portion of the training manikin may comprise a recess. The battery holder may be arranged in the recess such that the second side is arranged towards the chest portion and the first side is facing away from the chest portion.

The training manikin may comprise a surface element. The surface element may form an outside surface of at least part of the training manikin. The surface element may be a skin, such as a flexible skin. The surface element may be made of polyvinylchloride. The surface element may comprise a surface part with an opening. The battery holder may be fitted in the opening of the surface element, e.g. such that the first side of the battery holder is substantially parallel and/or flush with the surface part of the surface element. The surface part with the opening may be at a shoulder portion of the surface element. The surface part with the opening may be substantially parallel with the deflection direction. Alternatively, the surface part with the opening may be substantially perpendicular with the deflection direction.

The training manikin may comprise a first mounting element and a second mounting element. The first mounting element and the second mounting element may be adapted to mount the battery holder to the surface element.

The first mounting element may have a first rim portion in a first primary plane. The first mounting element may have a first lower portion in a first secondary plane. The first secondary plane may be parallel with the first primary plane. The first primary plane and the first secondary plane may be separated by a first distance. The first distance may be substantially equal to a battery holder thickness between the first side and the second side of the battery holder. The battery holder may be engaged with the first mounting element, e.g. such that the second side of the battery holder is facing the first lower portion and/or such that the first side of the battery holder is flush with the first rim portion.

The second mounting element may have a second rim portion in a second primary plane. The second mounting element may have a second lower portion in a second secondary plane. The second secondary plane and the second primary plane may be parallel. The second primary plane and the second secondary plane may be separated by a second distance. The first mounting element may be engaged with the second mounting element, e.g. such that the first lower portion of the first mounting element is arranged against the second lower portion of the second mounting element.

The second rim portion may be contacting an internal side of a boundary portion of the surface element around the opening. The first rim portion may be contacting an external side of the boundary portion of the surface element around the opening.

The battery holder may be fixed to the second mounting element with one or more fastening elements, e.g. screws. The one or more fastening elements may be extending between the battery holder and the second mounting element. The one or more fastening elements may extend through apertures of the first mounting element.

The first rim portion and/or the second rim portion may surround the battery holder.

An outer perimeter of the first rim portion and/or the second rim portion may encircle the opening of the surface element.

Also disclosed herein is a method for retrofitting a sensor system on a training manikin for practicing CPR comprising a chest portion and a back portion, and wherein the chest portion is deflectable along a deflection direction and towards the back portion between a non-deflected chest position and a maximum-deflected chest position. The method for retrofitting a sensor system may obtain a training manikin as disclosed herein.

The method for retrofitting may comprise providing a sensor assembly. The sensor assembly comprises one or more sensors for measuring one or more parameters indicative of the performance of a trainee during use of the training manikin in a training session, wherein at least part of the one or more parameters is indicative of deflection of the chest portion. The sensor assembly comprises at least one processing device connected to the one or more sensors and adapted to provide one or more output signals based on the one or more parameters. The method for retrofitting may comprise providing a replacement back portion comprising the sensor assembly.

The method for retrofitting may comprise removing the back portion of the training manikin, and after removing the back portion of the training manikin, attaching the replacement back portion to the training manikin.

When the training manikin comprises a mouth and/or nostrils and a lung portion comprising a lung bag and one or more airway components, e.g. including a mouth adaptor and/or an airway tube, fluidly connecting the lung bag with the mouth and/or the nostrils, and wherein at least part of the one or more parameters are indicative of ventilation of the lung portion, the method for retrofitting may comprise providing a replacement mouth adaptor having a side port, removing the mouth adaptor of the training manikin, and after removing the mouth adaptor of the training manikin, attaching the replacement mouth adaptor. Alternatively, the method may comprise providing a side port adapter having a side port, cutting the airway tube of the training manikin to form a first airway tube part and a second airway tube part, and after cutting the airway tube, inserting the side port adaptor between the first airway tube part and the second airway tube part.

The method further may comprise fluidly connecting a pressure sensor of the one or more sensors with a sensor tube to the side port of the replacement mouth adaptor and/or of the side port adaptor.

When the training manikin comprises a surface element forming an outside surface of at least part of the training manikin, the method may comprise removing the surface element of the training manikin, and after removing the surface element of the training manikin, attaching the sensor assembly to a sensor position internal of the training manikin.

The method for retrofitting may comprise providing a reflector and attaching the reflector to an internal chest support structure of the chest portion of the manikin.

The method for retrofitting may comprise providing a replacement surface element comprising a battery holder, electrically connecting the sensor assembly and the battery holder of the replacement surface element, and attaching the replacement surface element to the training manikin.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Fig. 1 schematically illustrates an exemplary CPR training system,
Figs. 2A and 2B schematically illustrates an exemplary training manikin,
Fig. 3 is a block diagram of an exemplary training manikin and client devices,
Figs. 4A and 4B schematically illustrates an exemplary training manikin,
Fig. 5 schematically illustrates parts of an exemplary manikin,
Fig. 6 schematically illustrates an exemplary reflector assembly,
Fig. 7 schematically illustrates parts of an exemplary manikin,
Fig. 8 is a block diagram of exemplary sensors of an exemplary manikin,
Figs. 9A and 9B schematically illustrates an exemplary airway component,
Figs. 10A and 10B schematically illustrates an exemplary battery holder,
Fig. 11 schematically illustrates an exemplary manikin,
Fig. 12 schematically illustrates an exemplary manikin,
Fig. 13 schematically illustrates an exploded view of an exemplary battery holder,
Fig. 14 is a block diagram of an exemplary method for registering performance of CPR,
Fig. 15 is a block diagram of an exemplary method for retrofitting a sensor system,
Figs. 16A and 16B schematically illustrates an exemplary manikin,
Fig. 17 is a block diagram of an exemplary method for retrofitting a sensor system, and
Figs. 18A and 18B schematically illustrates an exemplary manikin.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

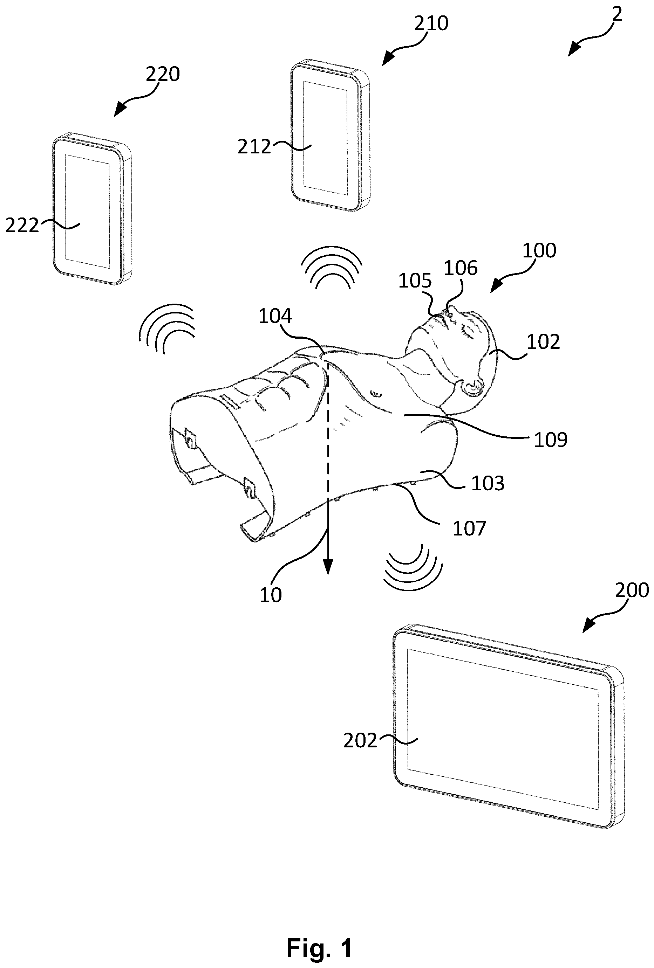

Fig. 1 schematically illustrates an exemplary CPR training system 2 comprising a training manikin 100 and a plurality of client devices including a first client device 200, a second client device 210 and a further second client device 220. For example, the first client device 200 may be an instructor device, and the second client device 210 and the further second client device 220 may be client devices of trainees, e.g. two trainees performing cooperative training on the manikin 100, or one trainee training on the manikin while another trainee is studying. Alternatively or additionally a client device, e.g. the second client device 210 or the further second client device 220 may work as a simulated defibrillator or other equipment relevant for the CPR training.

The training manikin 100 is for practicing cardiopulmonary resuscitation (CPR), e.g. for allowing a trainee to practice chest compression and/or lung ventilation. The training manikin 100 comprises a head 102 and a torso 103. The torso 103 comprises a chest portion 104 and a back portion 107. The chest portion 104 is configured to simulate a patient's chest to allow compression during practice of chest compression. The chest portion 104 is deflectable, e.g. during compression training, along a deflection direction 10 towards the back portion 107. The deflection direction 10 may generally be perpendicular to the ground and/or back portion 107. The chest portion 104 may be deflectable between a non-deflected chest position (as illustrated) and a maximum-deflected chest position wherein the distance between the chest portion 104 and the back portion 107 is minimised.

The manikin 100 may comprise a surface element 109 forming an outside surface of at least part of the training manikin 100. The surface element 109 may be a skin of the manikin 100. The surface element 109 may be flexible. The surface element 109 may be polyvinylchloride. In some examples, the surface element 109 may cover the majority of the torso 103, as illustrated, in other examples, the surface element 109 may cover only some part of the training manikin 100.

The training manikin 100 further comprises a lung portion (not shown), which is in fluid communication with a mouth 105 and nostrils 106 of the head 102. The lung portion and the mouth 105 and nostrils 106 simulates a patient's airways so as to allow practice of lung ventilation. Alternative training manikins may be only for practicing chest compression, i.e. the head 102 and/or the lung portion of the illustrated examples may be omitted.

The training manikin 100 is provided with one or more sensors for measuring one or more parameters indicative of the performance of the trainee during use of the training manikin in a training session. Exemplary parameters may include parameters indicative of lung ventilation volume, stomach inflation, compression depth, hand position on the chest, compression frequency and other parameters relevant for assessment of the training. For example, the one or more parameters, or part thereof may be indicative of deflection of the chest portion, and/or one or more parameters or part thereof may be indicative of ventilation of the lung portion.

In Fig. 1, the training manikin 100 is illustrated as an adult sized training manikin. However, it is noted that the training manikin 100 according to the present disclosure may be any sized manikin, such as a baby sized manikin or a toddler sized manikin.

The client devices 200, 210, 220 may comprise respective displays 202, 212, 222, which may be touch sensitive displays. The client devices 200, 210, 220 may be tablets and/or smart phones.

The manikin 100 may comprise a wireless communication module adapted to establish wireless communication links with the plurality of client devices 202, 212, 222, e.g. such as to enable transmission of training data based on the one or more parameters to the first client device 200, to the second client device 210, and/or to the further second client device 220.

The manikin 100 may, e.g. via the wireless communication module, be adapted to receive first device data from the first client device 200, second device data from the second client device 210, and/or further second device data from the further second client device 220.

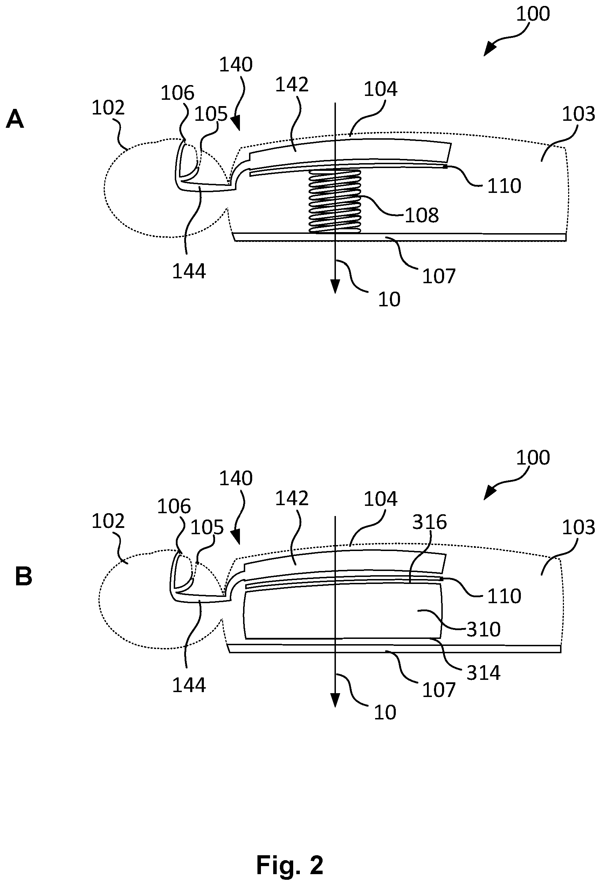

Figs. 2A and 2B schematically illustrates an exemplary training manikin 100, such as the training manikin 100 as illustrated in Fig. 1. The training manikin 100 comprises an optional head 102 and a torso 103. The torso 103 comprises a chest portion 104 and a back portion 107. The chest portion 104 is deflectable along a deflection direction 10 towards the back portion 107.

The training manikin 100 may, as illustrated in Fig. 2A, comprise a compression spring 108 biasing the chest portion 104 towards a non-deflected chest position. Furthermore, the chest portion 104 comprises an internal chest support structure 110 in engagement with the compression spring 108.

Alternatively, the training manikin 100 may, as illustrated in Fig. 2B, comprises an internal block element 310. The internal block element 310 may be made by a resilient material, such as foam, which biases the chest portion 104 towards the non-deflected chest position. Hence, during compression training, the vertical thickness of the internal block element 310 may be compressed. The internal chest support structure 110 may be provided also in combination with the internal block element 310, as illustrated, or may alternatively be omitted. The internal block element 310 comprises a first block side 314 and a second block side 316. The first block side 314 is arranged towards the back portion 107, and the second block side 316 is arranged towards the chest portion 104.

The training manikin 100 may further, as illustrated, comprise a lung portion 140, which is in fluid communication with the mouth 105 and nostrils 106 of the head 102. The lung portion 140 comprises a lung bag 142 and one or more airway components 144 fluidly connecting the lung bag 142 with the mouth 105 and nostrils 106. The airway components 144 may comprise airway tube(s), a lung adaptor and/or a mouth adaptor.

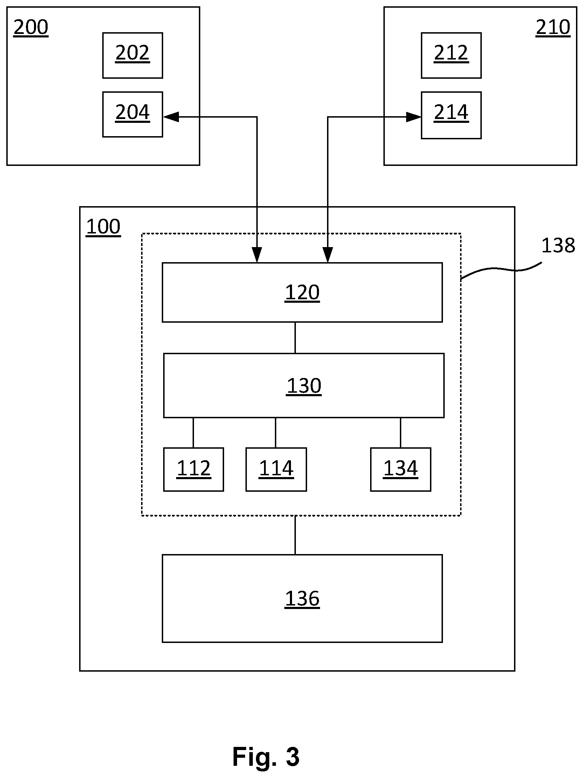

Fig. 3 is a block diagram of an exemplary training manikin 100 and two client devices, including a first client device 200 and a second client device 210. The manikin 100 and client devices 200, 210 may be the corresponding devices of the system 2 described in relation to Figs. 1 and 2. For example, the client devices 200, 210 may comprise respective displays 202, 212, which may be touch sensitive displays.

The manikin 100 comprises sensors including one or more ventilation sensor 114 and a compression sensor 112. As noted above, a manikin may in some embodiments be only for practicing chest compression, in which case the ventilation sensor(s) 114 may be omitted. The sensors 112, 114 may measure one or more parameters indicative of the performance of a trainee during use of the manikin 100. For example, the parameters or parts thereof may be indicative of deflection of the chest portion, and/or one ventilation of the lung portion.

The manikin 100 comprises a processing device 130 connected to the sensors 112, 114. The processing device 130 may further be connected to a wireless communication module 120. The processing device 130 may be adapted to obtain and/or provide one or more output signals based on the one or more parameters received from the sensors 112, 114. For example, the output signals from the processing device 130 may comprise a compression signal indicative of deflection, e.g. distance of deflection, of the chest portion 104, e.g. relative to the non-deflected chest position. The output signals from the processing device 130 may alternatively or additionally comprise a ventilation signal indicative of ventilation of the lung portion, e.g. the ventilation signal may be indicative of volume of air contained in the lung portion and/or administered to the lung portion. The output signals may be provided, e.g. as training data, to the client devices 200, 210. For example, the output signals may be provided, e.g. as training data, to the wireless communication module 120. Alternatively, the output signals may be provided to the client devices 200, 210 using a wired connection. The processing device 130 may further be connected to an electronic memory 134 of the manikin 100, which may be adapted to store various information, e.g. including parameters based on data received from the client devices 200, 210, the training data, and/or the one or more parameters from the sensors 112, 114.

The wireless communication module 120 may establish wireless communication links with the first client device 200 and/or the second client device 210, e.g. with a first client wireless communication module 204 of the first client device 200, and/or with a second client wireless communication module 214 of the second client device 210, respectively. The wireless communication modules 120, 204, 214 may be Bluetooth modules configured for communication in accordance with a Bluetooth protocol. Alternatively, the wireless communication modules 120, 204, 214 may utilize other wireless communication modalities.

The sensors 112, 114, the wireless communication module 120, the processing device 130, and the electronic memory 134 may be provided as a sensor module 138. For example, the components may be provided on a single PCB and/or may be provided in a common housing. The manikin 100 comprises a power unit 136, which may be external to the sensor module 138. The power unit 136 may comprise one or more batteries, and/or may provide for a connection to an external power socket. The power unit 136 may be electrically connected to the sensor module 138, such as to the one or more sensors 112, 114, the wireless communication module 120, and/or the processing device 130. In some examples, the power unit 136 is a battery holder, e.g. comprising a battery compartment adapted to receive one or more batteries.

The electronic memory 134 may be adapted to store parameters received from the client devices 200, 210. For example, the electronic memory 134 may be adapted to store personal and/or other information to be shared between the connected client devices 200, 210. The electronic memory 134 may comprise parameters of the manikin 100, which may be used in generating training data based on the parameters from the sensors 112, 114. For example, the electronic memory 134 may store a type parameter indicative of the type of the training manikin 100, e.g. a first type of training manikin selected from a plurality of types of training manikins. For example, the type parameter may be indicative of whether the training manikin 100 is a baby manikin, a toddler manikin, an adult manikin of a first type or an adult manikin of a second type. The electronic memory 134 may further store other manikin specific data, e.g. production year, date of last service check etc.

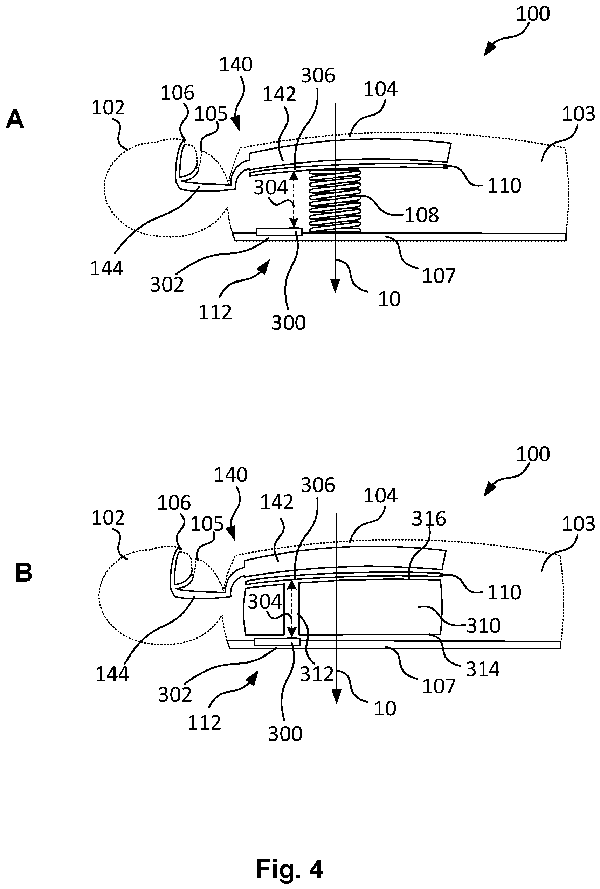

Figs. 4A and 4B schematically illustrates an exemplary training manikin 100, corresponding to the training manikins as illustrated in Figs. 2A and 2B, respectively, with an exemplary compression sensor 112.

The compression sensor 112 comprises an optical distance sensor 300 arranged at a sensor position 302. The optical distance sensor 300 may be attached to the back portion 107, as illustrated. The optical distance sensor 300 may be embedded in the back portion 107. The optical distance sensor 300 is measuring an internal chest distance 304, e.g. between the optical distance sensor 300 and a reflector 306, which may be a dedicated element. Alternatively, the internal chest support structure 110 may form the reflector 306. Thus, the reflector 306 moves with the chest portion 104 during deflection of the chest portion 104, along the deflection direction 10. Thus, the compression signal obtained and/or provided by the processing device may be based on the internal chest distance 304, as measured by the optical distance sensor 300. The optical distance sensor 300 may comprise a Time of Flight (ToF) sensor.

As exemplified in Fig. 4B, the internal block element 310 may be provided with a hole 312 therethrough from the first block side 314 to the second block side 316. The hole 312 is arranged to provide a visible path between the optical distance sensor 300 and the reflector 306.

In the illustrated examples, the sensor position 302 is stationary relative to the back portion 107 during deflection of the chest portion 104. However, alternatively, the optical distance sensor 300 could be attached to the movable chest portion 104, and the reflector 306 could be formed by the back portion 107, or be attached to the back portion.

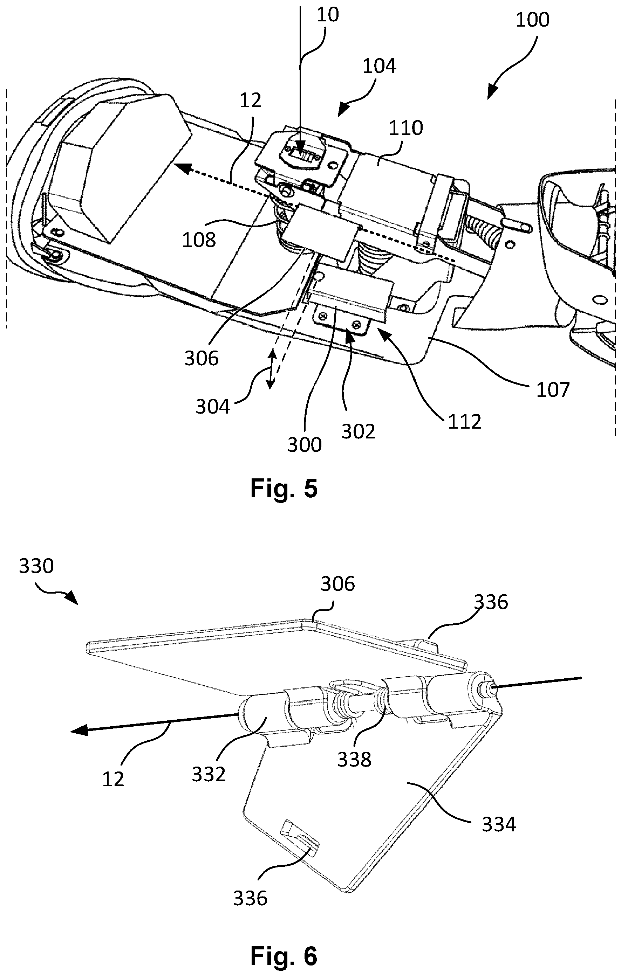

Fig. 5 schematically illustrates some internal components of an exemplary manikin 100, such as a manikin 100 in accordance with the example of Fig. 4a. The manikin 100 comprises a compression sensor 112 comprising an optical distance sensor 300 arranged at a sensor position 302. The optical distance sensor 300 may be attached to the back portion 107, as illustrated. The optical distance sensor 300 is measuring an internal chest distance 304, e.g. between the optical distance sensor 300 and a reflector 306. The present example shows a reflector 306 attached to the internal chest support structure 110. The reflector 306 extends laterally from the internal chest support structure 110.

The reflector 306 may be hingedly attached to the internal chest support structure 110, allowing rotation of the reflector 306 around a hinge axis 12, e.g. perpendicular to the deflection direction 10. The hinged attachment of the reflector 306 may reduce the risk of the reflector being broken by a trainee deflecting the chest portion 104 by pressing on the chest portion over the reflector 306. The reflector 306 may be rotatable between a first reflector position and a second reflector position. In the first reflector position the reflector 306 may be substantially perpendicular to the deflection direction 10, as illustrated. In the second reflector position, the reflector may be deflected such as to be more parallel with the deflection direction 10. For example, the reflector 306 may be substantially parallel with the deflection direction 10 in the second reflector position. Further details of the reflector is provided in relation to Fig. 6.

Fig. 6 schematically illustrates an exemplary reflector assembly 330, comprising a reflector 306 such as the reflector 306 as described in relation to Fig. 5, which may be attached to an internal chest support structure 110 of a training manikin 100. The reflector assembly 330 comprises a reflector hinge 332 which allows the reflector 306 to be hingedly attached to the internal chest support structure. The reflector hinge 332 allows rotation of the reflector 306 around the hinge axis 12.

The reflector assembly 330 further comprises a reflector attachment part 334, adapted to couple top the internal support structure. For example, the reflector attachment part 334 may comprise one or more engagement elements 336, adapted to engage with a coupling portion of the internal support structure, e.g. by resiliently engage with an edge of the internal support structure. The reflector hinge 332 may couple the reflector 306 and the reflector attachment part 334, allowing rotation of the reflector 306 around the hinge axis 12, relative to the reflector attachment part 334, and thereby relative to the internal chest support structure, when attached thereto.

The reflector 306 is biased towards the first reflector position, as illustrated, by a biasing element 338, such as a torsion spring, as illustrated.

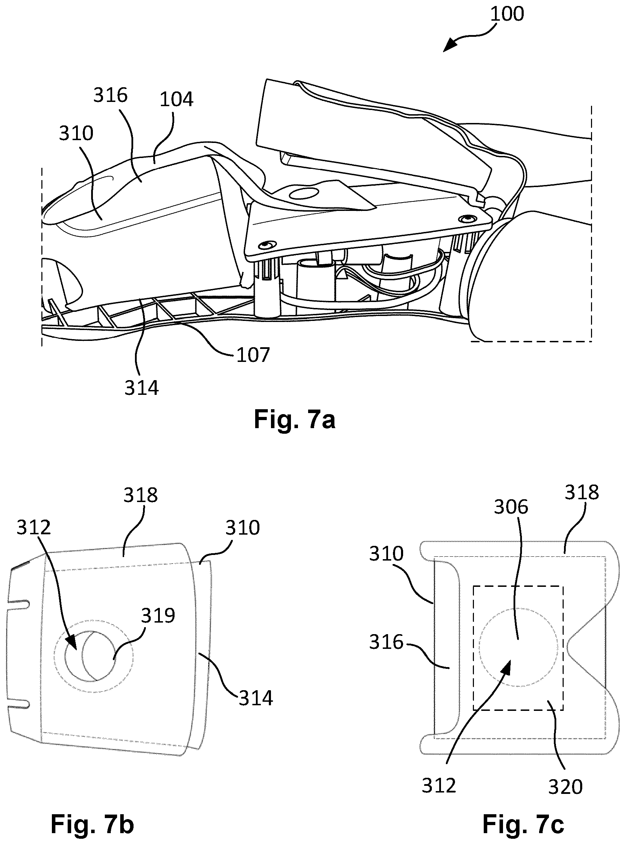

Fig. 7 schematically illustrates internal components of another exemplary manikin 100, such as a manikin 100 in accordance with the example of Fig. 4b. The manikin 100 of Fig. 7 comprises an internal block element 310. The internal block element 310 forms the interior of the chest portion 104 of the manikin 100. The internal block element 310 may be made by a resilient material, such as foam, which biases the chest portion 104 towards the non-deflected chest position. Hence, during compression training, the trainee compresses the vertical thickness of the block element.

An optical distance sensor 300 (see Fig. 4b) may be arranged at a sensor position 302. For example, the optical distance sensor may be attached to the back portion 107. The internal block element 310 may be arranged between the sensor position and the reflector 306.

The internal block element 310 is further illustrated in Figs. 7b and 7c, respectively showing the internal block element 310 from a first block side 314 of the internal block element and from a second block side 316 of the internal block element 310. The first block side 314 is arranged towards the sensor position, in the present example towards the back portion 107, and the second block side 316 is arranged towards the reflector 306. The internal block element 310 is provided with a hole 312 therethrough from the first block side 314 to the second block side 316. The hole 312 is arranged to provide a visible path between the optical distance sensor and the reflector 306.

The internal block element 310 may, as illustrated, be enclosed by a cover element 318 having an opening 319 exposing the hole 312 of the internal block element 310 on the first block side 314. The cover element 318 may cover the hole 312 of the internal block 310 element on the second block side 316, whereby, the cover element 318 may form the reflector 306. Alternatively, the reflector 306 may be formed by a plate, such as illustrated in Fig. 5 and 6 or such as the internal chest support structure 110 as illustrated in Fig. 4b, in which case the cover element 318 may be omitted, or the cover element 318 may be provided with a second opening exposing the hole 312 of the internal block element 310 on the second block side 316.

The cover element 318 may comprises a reinforcement part 320 covering the hole 312 of the internal block element 310 on the second block side 316. The reinforcement part 320 of the cover element 318 may be positioned such as to reduce the risk that the deflection of the chest portion and thereby of the internal block element 310 during training of compressions, cause breakage of the non-supported part of the cover element 318, i.e. the part covering the hole 312. The reinforcement part 320 may be provided by the cover element 318 comprising an extra plate of material forming the reinforcement part, or that the thickness of the reinforcement part 320 of the cover element 318 is thicker than the remainder of the cover element 318.

The solution as illustrated by Figs. 7a-7c is particularly suitable for a baby sized training manikin.

With reference to previous Figs. 1-7, the processing device 130 may be adapted to filter an incoming signal to obtain a filtered signal. For example, the processing device 130 may be adapted to filter the distance sensor signal to obtain a filtered distance signal and base the compression signal on the filtered distance signal.

For example, the processing device 130 may filter the distance sensor signal by determining a rate of change of the distance sensor signal, and in accordance with the rate of change of the distance sensor signal being above a high threshold applying a first filter on the distance sensor signal to obtain the filtered distance signal, and in accordance with the rate of change of the distance sensor signal being below a low threshold applying a second filter on the distance sensor signal to obtain the filtered distance signal. In accordance with the rate of change of the distance sensor signal being below the high threshold and above the low threshold, a combination of both the first filter and the second filter may be applied on the distance sensor signal to obtain the filtered distance signal. The first filter may be based on a first number of sampling points of the distance sensor signal and the second filter may be based on a second number of sampling points of the distance sensor signal. The second number of sampling points may be more than the first number of sampling points. Thereby, the filtered distance signal is allowed to change more rapidly when the rate of change of the distance sensor signal is high, while suppressing more noise when the rate of change of the distance sensor signal is low. Employing such filtering dependent on rate of change has been found advantageous in the present case, as compressions are usually performed in cycles alternating between periods of no change, e.g. when no compressions are performed, e.g. while performing ventilation, and periods with continuous compressions, e.g. of 5-6 cm for an adult manikin, usually with a rate of 100-120 compressions per minute. The first filter and/or the second filter may be finite impulse response (FIR) filter, such as a Savitsky-Golay filter, such as a 2^{nd} order Savitsky-Golay filter. The high threshold may be between 0.05-0.15 m/s, such as 0.1 m/s. The low threshold may be between 0.01-0.05 m/s, such as 0.2 m/s.

As mentioned above, the electronic memory 134 may store a type parameter indicative of the type of the training manikin 100. The processing device 130 may be adapted to base the compression signal on the type parameter. The processing device 130 may be adapted to retrieve the type parameter from the electronic memory 134 and base the compression signal on the type parameter. For example, different types of manikin may be constructed differently or the compression sensor 112 may be positioned differently, leading to the measured distance being indicative of different compression parameters, e.g. compression depths, for different types of manikins. For example, in some types of manikin compressions may result in a pivoting movement of an internal mechanism, while others may result in a linear motion of the chest portion. Thus, in some examples, the measured distance needs to be adjusted to account for a difference in lever arm between the measured position and the intended position of the trainee's hand during compression training.

The compression signal may be based on a compression baseline value. The compression baseline value may be based on measurement of the one or more parameters during a compression baseline period. For example, the compression baseline value may be based on the distance sensor signal during the compression baseline period. The compression baseline period may be a predetermined period, e.g. 3 seconds, e.g. at the beginning of a session, such as following turning on of the manikin 100, or following connecting a client device 200, 210, 220, or following an instruction or a signal received from one of the client devices 200, 210, 220. The processing device 130 may be adapted to base the compression signal on the compression baseline value and/or to obtain the compression baseline value, e.g. based on measurement of the one or more parameters, such as the distance sensor signal, during the compression baseline period.

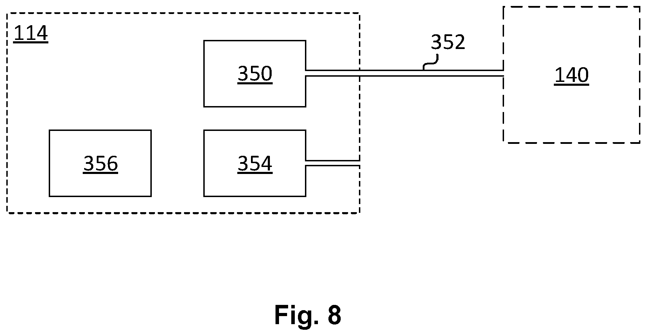

Fig. 8 is a block diagram of exemplary sensors of an exemplary manikin, such as the ventilation sensor(s) 114 as described in relation to Fig. 3. Particularly, Fig. 8 illustrates sensors on which the ventilation signal may be based. However, the illustrated sensors may alternatively or additionally be employed for other purposes, i.e. the output of the sensors of the following may be used to obtain or adjust other signals.

The one or more sensors, such as the ventilation sensor(s) 114, may comprise a pressure sensor 350, e.g. measuring air pressure in the lung portion 140 (see also Fig. 2). The pressure sensor 350 provides a pressure sensor signal indicative of the measured air pressure in the lung portion 140. The pressure sensor signal may be provided to the processing device 130 (Fig. 3), which may base the ventilation signal on the pressure sensor signal. The pressure sensor 350 may be fluidly connected with a sensor tube 352 to the lung portion 140, such as to the one or more airway components 144 (Fig. 2) of the lung portion 140.

The one or more sensors, such as the ventilation sensor(s) 114, may comprise an ambient pressure sensor 354, e.g. measuring air pressure outside the lung portion 140, e.g. in the vicinity of the ambient pressure sensor 354. The ambient pressure sensor 354 provides an ambient pressure sensor signal indicative of the measured air pressure outside the lung portion 140. The ambient pressure sensor signal may be provided to the processing device 130 (Fig. 3), which may base the ventilation signal on the ambient pressure sensor signal. For example, the ventilation signal may be based on a difference between the measured air pressure inside and outside the lung portion, e.g. on a difference between the ambient pressure sensor signal and the pressure sensor signal.

The one or more sensors, such as the ventilation sensor(s) 114, may comprise a temperature sensor 356, e.g. measuring temperature, e.g. in the vicinity of the temperature sensor 356. The temperature sensor 356 may provide a temperature sensor signal indicative of the measured temperature. The temperature sensor signal may be provided to the processing device 130 (Fig. 3), which may base the ventilation signal on the temperature sensor signal.

As also described above, the processing device 130 may be adapted to filter an incoming signal to obtain a filtered signal. For example, the processing device 130 may be adapted to filter the pressure sensor signal, the ambient pressure sensor signal and/or a difference between the pressure sensor signal and the ambient pressure sensor signal to obtain one or more filtered pressure signals and base the ventilation signal on the one or more filtered pressure signals.

As mentioned above, the electronic memory 134 (see fig. 3) may store a type parameter indicative of the type of the training manikin 100. The processing device 130 may be adapted to base the ventilation signal on the type parameter. The processing device 130 may be adapted to retrieve the type parameter from the electronic memory 134 and base the ventilation signal on the type parameter. For example, different types of manikin may be constructed differently leading to the measured pressure being indicative of different ventilation parameters, e.g. ventilation volume, for different types of manikins.

The ventilation signal may be based on a ventilation baseline value. The ventilation baseline value may be based on measurement of the one or more parameters during a ventilation baseline period. For example, the ventilation baseline value may be based on the pressure sensor signal and/or the ambient pressure sensor signal during the ventilation baseline period. The ventilation baseline period may be a predetermined period, e.g. 3 seconds, e.g. at the beginning of a session, such as following turning on of the manikin 100, or following connecting a client device 200, 210, 220, or following an instruction or a signal received from one of the client devices 200, 210, 220. The ventilation baseline period and the compression baseline period described above may be the same, i.e. the ventilation baseline value and the compression baseline value may be based on measurements during the same period. The processing device 130 may be adapted to base the ventilation signal on the ventilation baseline value and/or to obtain the ventilation baseline value, e.g. based on measurement of the one or more parameters, such as the pressure sensor signal, the ambient pressure sensor signal and/or a difference between the pressures sensor signal and the ambient pressure sensor signal, during the ventilation baseline period.

The measured pressure in the lung portion 140 is found to be closely related to the volume of air therein, likely because the lung portion 140 is constrained by surrounding elements of the manikin exhibiting elastic properties, leading to an increased pressure in the lung portion as volume of air therein is increasing. In effect, the lung portion acts like a spring making it possible to correlate the air volume to a measured pressure.

The ventilation signal may be based on a conversion, using an n^{th} order polynomial equation. The processing device 130 may be adapted to base the ventilation signal on the conversion using the n^{th} order polynomial equation. For example, the ventilation signal may be based on a conversion using the n^{th} order polynomial equation of one or more measured air pressure parameters of the one or more parameters, such as of the pressure sensor signal, the ambient pressure sensor signal and/or a difference between the pressure sensor signal and the ambient pressure sensor signal. For example, n may be between 1 and 5, such as between 2 and 4, such as 3. Alternatively or additionally, the ventilation signal may be based on a rate of change of the one or more measured air pressure parameters of the one or more parameters. For example, the ventilation signal may be based on a rate of change of the measured air pressure in the lung portion and/or the pressure sensor signal, e.g. in combination with the measured air pressure outside the lung portion and/or the ambient pressure sensor signal. Alternatively or additionally, the ventilation signal may be based on a rise time of the one or more measured air pressure parameters of the one or more parameters. For example, the ventilation signal may be based on a rise time of the measured air pressure in the lung portion and/or the pressure sensor signal, e.g. in combination with the measured air pressure outside the lung portion and/or the ambient pressure sensor signal. The n^{th} order polynomial equation may be empirically established, e.g. by inflating lung portions of a plurality of manikins, e.g. of each type and/or at various temperatures and/or with varying rate of change and/or rise time, with a known volume of air and measuring the resulting pressure. Thus, n^{th} order polynomial equations of relationships between pressure and air volume, and optionally rate of change and/or rise time, may be obtained for different types of manikins and/or for different temperatures. Based on such empirically established relationship, optionally in combination with other factors such as temperature, the processing device 130 is able to convert a pressure measured by the pressure sensor to a volume of air in the lung portion, and thereby obtain the resulting ventilation signal. By using an empirically established relationship between pressure and air volume, optionally adjusted by temperature and/or other parameters, e.g. rate of change and/or rise time, reduces or eliminates the need for the instructor and/or trainee to calibrate the pressure-volume relationship. The n^{th} order polynomial equation may be stored in the electronic memory 134. The processing device 130 may be adapted to retrieve the n^{th} order polynomial equation from the electronic memory 134. Alternatively or additionally, the electronic memory 134 may comprise a look-up table with pre-calculated values associated with the n^{th} order polynomial equation, and the processing device 130 may be adapted to retrieve one or more of the pre-calculated values from the look-up table of the electronic memory 134, to convert the pressure measured, e.g. in combination with a rate of change and/or rise time of the pressure measured, to a volume of air in the lung portion, and thereby obtain the resulting ventilation signal. The processing device 130 may be adapted to interpolate, e.g. using barycentric interpolation, between the retrieved one or more pre-calculated values from the look-up table, to obtain the resulting ventilation signal.

The electronic memory 134 may store one or more adjustment values, which may be used to adjust the n^{th} order polynomial equation and/or values derived therefrom. Hence, the ventilation signal may be based on the one or more adjustment values. The processing device 130 may be adapted to retrieve the one or more adjustment values from the electronic memory 134. The processing device 130 may be adapted to base the ventilation signal on the one or more adjustment values, such as on the conversion using the n^{th} order polynomial equation and/or values derived therefrom adjusted by the one or more adjustment values. For example, in case it is found, e.g. during quality control, that the pressure-volume relationship is incorrect for a particular manikin, the adjustment values, locally stored on the electronic memory of that manikin, may be changed, such that the effective polynomial equation used to calculate volume based on the pressure measurements fits that particular manikin. Similarly, the adjustment values may be changed following specific calibration of an individual manikin, e.g. after a time of which it is assumed that the mechanical properties of the manikin have changed leading to a different pressure-volume relationship.

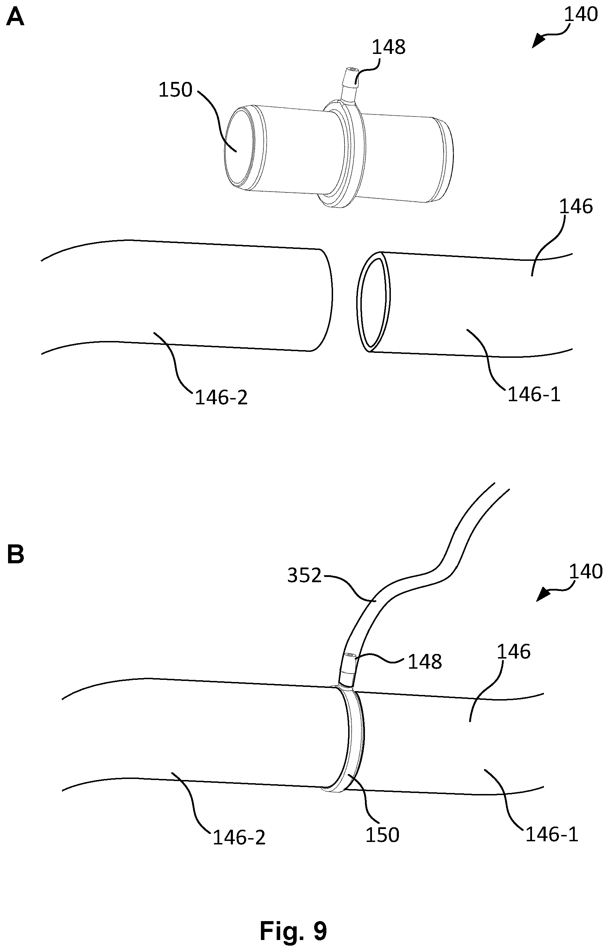

Figs. 9A and 9B schematically illustrates an exemplary airway component 144, in particular an airway tube 146 comprising a side port 148. The airway tube 146 may be fluidly connecting the mouth or nostrils of the manikin with the lung bag of the lung portion. The pressure sensor 350 (Fig. 8) may be fluidly connected with the side port 148 by sensor tube 352.

The airway tube 146 may comprise a first airway tube part 146-1 and a second airway tube part 146-2. Furthermore, the airway tube 146 may comprise a side port adapter 150 inserted between the first airway tube part 146-1 and the second airway tube part 146-2. The side port adapter 150 may comprising the side port 148. For example, the side port 148 may be retrofitted by cutting the airway tube 146, as illustrated in Fig. 9A, and inserting the side port adapter 150 between the first airway tube part 146-1 and the second airway tube part 146-2, as illustrated in Fig. 9B.

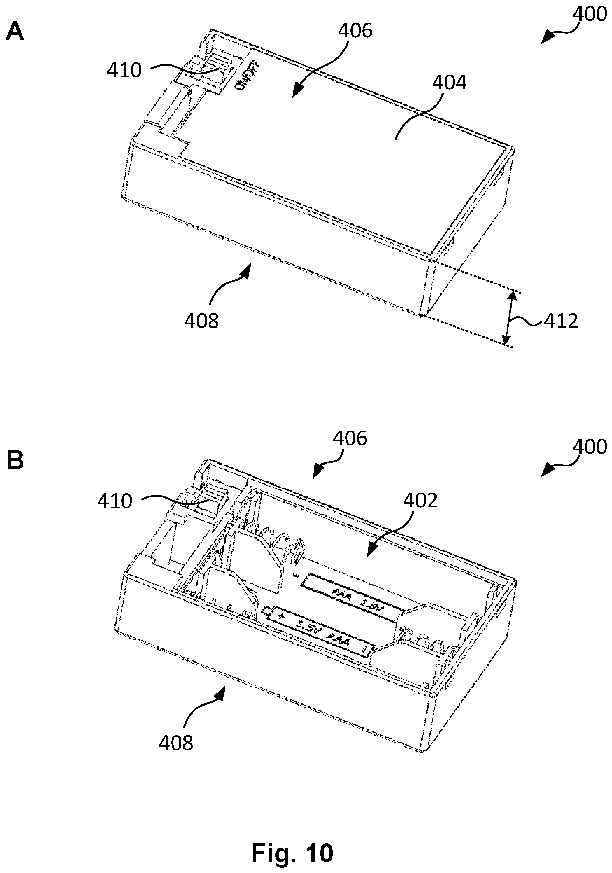

Figs. 10A and 10B schematically illustrates an exemplary battery holder 400, which may be the power unit 136, as described with respect to Fig. 3. Hence, the battery holder 400 may be electrically connected to the sensor module 138, such as to the one or more sensors 112, 114, the wireless communication module 120, and/or the processing device 130.

The battery holder 400 comprises a battery compartment 402 adapted to receive one or more batteries. For example, the battery compartment 402, as illustrated may be adapted to receive three AAA batteries. The battery holder 400 comprises a cover portion 404, such as a removable cover portion, to close the battery compartment 402 to the outside. The cover portion 404 is shown in Fig. 10A, while not shown in Fig. 10B to reveal the battery compartment 402.

The battery holder 400 has a first side 406 and a second side 408. The second side 408 is opposite the first side 406. The cover portion 404 forms part of the first side 406.

The battery holder 400 comprises an on/off actuator 410. The on/off actuator 410 may be adapted to connect and disconnect the electrical connection between the one or more batteries in the battery compartment 402 and the sensor module 138 such as to the one or more sensors 112, 114, the wireless communication module 120, and/or the processing device 130. The on/off actuator 410 may, as illustrated, be arranged on the first side 406 of the battery holder 400.

The battery holder 400 may have a battery holder thickness 412 between the first side 406 and the second side 408 of the battery holder.

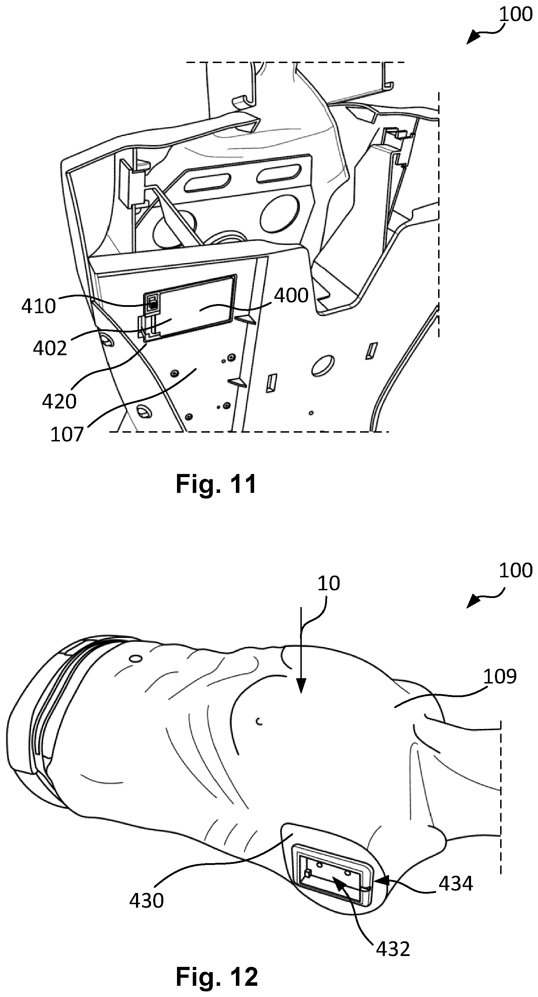

Fig. 11 schematically illustrates an exemplary manikin 100, such as the manikin 100 as described and illustrated in relation to previous figures. Particularly, Fig. 11 illustrates an exemplary position of the battery holder 400 as described with respect to Figs. 10A and 10B. The back portion 107 of the manikin 100 may comprise a recess 420. The battery holder 400 may be arranged in the recess such that the second side 408 is arranged towards the chest portion (not visible) and the first side 406 is facing away from the chest portion. Thereby, the cover portion 404 and the on/off actuator 410 may be accessible from the back of the manikin 100.

Fig. 12 schematically illustrates an exemplary manikin 100, such as the manikin 100 as described and illustrated in relation to previous figures. Particularly, Fig. 12 illustrates an exemplary position for the battery holder 400 as described with respect to Figs. 10A and 10B.

The surface element 109 may comprise a surface part 430 with an opening 432. The surface part 430 with the opening 432 may be at a shoulder portion of the surface element 109, as illustrated. The surface part 430 may comprise a boundary portion 436 around the opening 432. The battery holder 400 may be fitted in the opening 432, e.g. such that the first side 406 of the battery holder 400 is substantially parallel with the surface part 430 of the surface element 109.

The surface part 430 with the opening 432 may be substantially parallel with the deflection direction 10, as illustrated. Alternatively, the surface part 430 may be substantially perpendicular with the deflection direction 10. Hence, the battery holder 400 may be arranged as described on the front or back of the manikin 100.

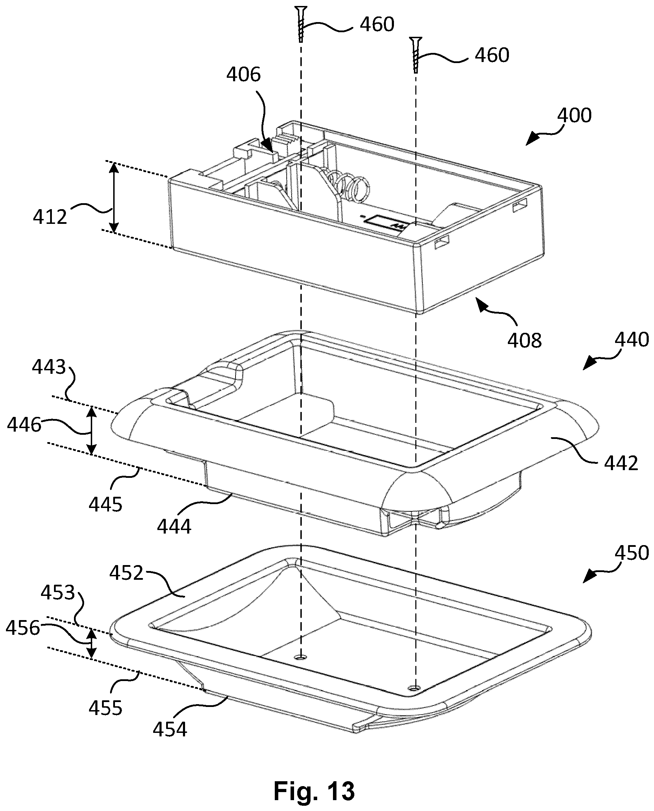

Fig. 13 schematically illustrates an exploded view of an exemplary battery holder 400, such as the battery holder 400 of the 10 and exemplary mounting elements 440, 450 for attaching the battery holder 400 to the surface element of the manikin, as exemplified in Fig. 12. A first mounting element 440 and a second mounting element 450 is shown.

The first mounting element 440 has a first rim portion 442 in a first primary plane 443 and a first lower portion 444 in a first secondary plane 445. The first primary plane 443 and the first secondary plane 445 are parallel. The first primary plane 443 and the first secondary plane 445 are separated by a first distance 446. The first distance 446 may be substantially equal to the battery holder thickness 412 between the first side 406 and the second side 408 of the battery holder 400. The battery holder may be engaged with the first mounting element 440 such that the second side 408 of the battery holder 400 is facing the first lower portion 444 and the first side 406 of the battery holder 400 may be flush with the first rim portion 442.

The second mounting element 450 has a second rim portion 452 in a second primary plane 453 and a second lower portion 454 in a second secondary plane 455. The second primary plane 453 and the second secondary plane 455 are parallel. The second primary plane 453 and the second secondary plane 455 are separated by a second distance 456.

The first mounting element 440 may be engaged with the second mounting element 450 such that the first lower portion 444 of the first mounting element 450 is arranged against the second lower portion 454 of the second mounting element 450.

The boundary portion 436 around the opening 432 of the surface element 109 of the manikin 100 (see Fig. 12) may be sandwiched between the second rim portion 452 and the first rim portion 442. For example, the second rim portion 452 may be contacting an internal side of the boundary portion 436 of the surface element 109 around the opening 432, and the first rim portion 442 may be contacting an external side of the boundary portion 436 of the surface element 109 around the opening 432. The first rim portion 442 and the second rim portion 452 forms flanges for sandwiching the boundary portion 436 of the surface element 109. After assembly, an outer perimeter of the first rim portion 442 and/or an outer perimeter of the second rim portion 452 may encircle the opening 432 of the surface element 109.

The battery holder 400 may be fixed to the second mounting element 450 with one or more fastening elements 460, e.g. screws, extending between the battery holder 400 and the second mounting element 450. The first mounting element 440 may comprise apertures allowing the fastening elements to extend therethrough, such as to fasten in the second mounting element 450. Thereby, the battery holder may be attached to the mounting elements 440, 450 simultaneously with the mounting elements 440, 450 being connected and clasping the boundary portion 436 around the opening 432 of the surface element 109.

When assembled, the first rim portion 442 and/or the second rim portion 452 may surround the battery holder 400.

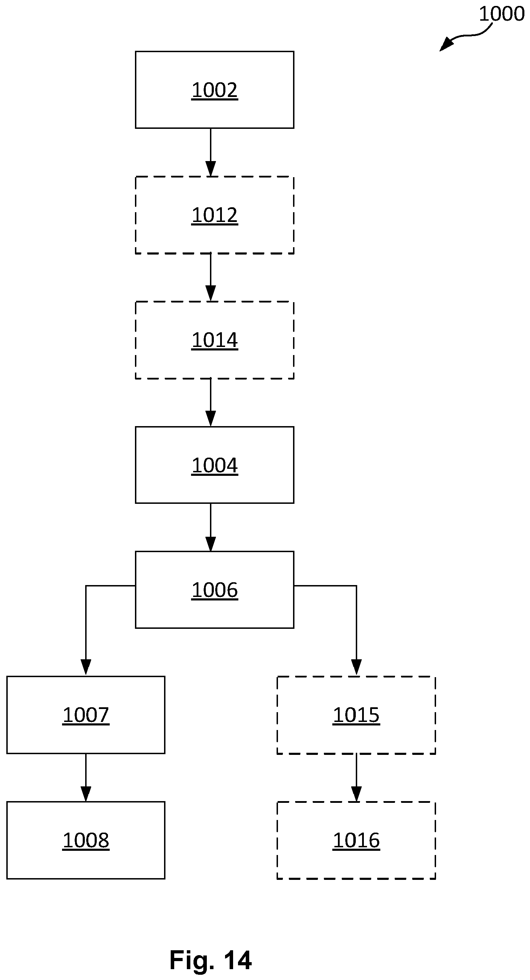

Fig. 14 is a block diagram of an exemplary method 1000 for registering performance of a trainee during practice of CPR.

The method 1000 comprises providing 1002 a training manikin, such as a training manikin 100 as described above in relation to the previous figures. For example, a training manikin comprising a chest portion and a back portion, and wherein the chest portion is deflectable along a deflection direction and towards the back portion between a non-deflected chest position and a maximum-deflected chest position. The training manikin further comprises one or more sensors for measuring one or more parameters indicative of the performance of a trainee during use of the training manikin in a training session. At least part of the one or more parameters are indicative of deflection of the chest portion.

The method 1000 further comprises starting a training session 1004 and measuring 1006 the one or more parameters with the one or more sensors during the training session. Furthermore, the method comprises obtaining 1007 and providing 1008 a compression signal indicative of deflection of the chest portion based on the one or more parameters.

Measuring 1006 the one or more parameters may include measuring an internal chest distance. Hence, the compression signal may be based on the measured internal chest distance. The internal chest distance may be measured 1006 by an optical distance sensor as explained previously. The measured internal chest distance may be between the optical distance sensor and the reflector, as explained previously.

Obtaining 1007 the compression signal may comprise filtering the measured internal chest distance to obtain a filtered internal chest distance and the compression signal may be based on the filtered internal chest distance. Thereby measurement noise may be reduced, and precision of the compression signal may be enhanced. Filtering of the measured internal chest distance may involve applying one or more filters, e.g. one or more finite impulse response (FIR) filters on the measured internal chest distance.

Filtering the measured internal chest distance may comprise determining a rate of change of the internal chest distance, in accordance with the rate of change of the internal chest distance being above a high threshold applying a first filter on the measured internal chest distance, to obtain the filtered internal chest distance, and in accordance with the rate of change of the internal chest distance being below a low threshold applying a second filter on of the measured internal chest distance to obtain the filtered internal chest distance. In accordance with the rate of change of the internal chest distance being below the high threshold and above the low threshold, a combination of both the first filter and the second filter may be applied on the measured internal chest distance to obtain the filtered internal chest distance. The first filter may be based on a first number of sampling points of the measured internal chest distance. The second filter may be based on a second number of sampling points of the internal chest distance. The second number of sampling points may be more than the first number of sampling points. Thereby, the filtered internal chest distance is allowed to change more rapidly when the rate of change of the distance sensor signal is high, while suppressing more noise when the rate of change of the distance sensor signal is low. The first filter and/or the second filter may be finite impulse response (FIR) filter, such as a Savitsky-Golay filter, such as a 2nd order Savitsky-Golay filter. The high threshold may be between 0.05-0.15 m/s, such as 0.1 m/s. The low threshold may be between 0.01-0.05 m/s, such as 0.2 m/s.

In some examples, the training manikin may comprise a mouth and/or nostrils and a lung portion comprising a lung bag and one or more airway components fluidly connecting the lung bag with the mouth and/or the nostrils, and wherein at least part of the one or more parameters are indicative of ventilation of the lung portion. For example, measuring 1006 the one or more parameters may include measuring air pressure in the lung portion, measuring air pressure outside the lung portion, and/or measuring temperature.

In such examples, where the training manikin comprises a lung portion and wherein at least part of the one or more parameters are indicative of ventilation of the lung portion, the method 1000 may comprise obtaining 1015 and providing 1016 a ventilation signal indicative of ventilation of the lung portion based on the one or more parameters. The ventilation signal may be indicative of volume of air contained in the lung portion and/or administered to the lung portion. For example, the ventilation signal is may be based on the measured air pressure in the lung portion, the measured air pressure outside the lung portion and/or the measured temperature. The ventilation signal may be based on a conversion, e.g. using an n^{th} order polynomial equation, of one or more measured air pressure parameters of the one or more parameters, such as of the pressure sensor signal, the ambient pressure sensor signal and/or a difference between the pressure sensor signal and the ambient pressure sensor signal. For example, n may be between 1 and 5, such as between 2 and 4, such as 3.

The compression signal and/or the ventilation signal may be based on a type parameter indicative of a first type of training manikin selected from a plurality of types of training manikins.

The method 1000 may comprise measuring 1012 at least part of the one or more parameters with the one or more sensors during one or more baseline periods, and obtain 1014 one or more baseline values based on the measurement 1012 during the respective baseline period. For example, at least part of the one or more parameters may be measured with the one or more sensors during a compression baseline period, and a compression baseline value may be obtained based on the measurement during the compression baseline period. The compression signal may be based on the compression baseline value. Alternatively or additionally, at least part of the one or more parameters may be measured with the one or more sensors during a ventilation baseline period, and a ventilation baseline value may be obtained based on the measurement during the ventilation baseline period. The ventilation signal may be based on the ventilation baseline value. As illustrated, the baseline period(s) may be before the starting 1004 of the training session.

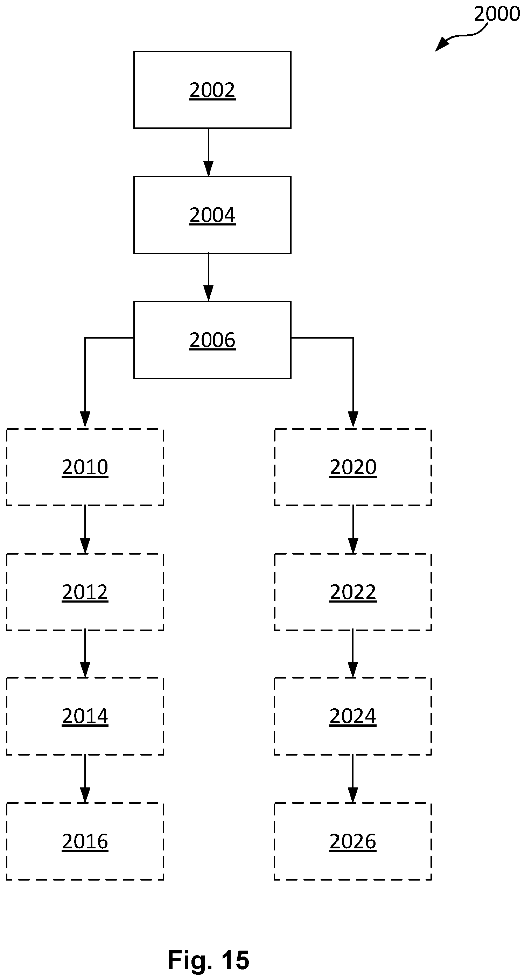

Fig. 15 is a block diagram of an exemplary method 2000 for retrofitting a sensor system on a training manikin for practicing CPR. For example, the method 2000 may be used to fit a sensor system to a manikin without measurement capabilities to obtain a manikin as described with respect to the previous figures. Particularly, the method 2000 is for retrofitting a sensor system on a training manikin comprising a chest portion and a back portion, and wherein the chest portion is deflectable along a deflection direction and towards the back portion between a non-deflected chest position and a maximum-deflected chest position.

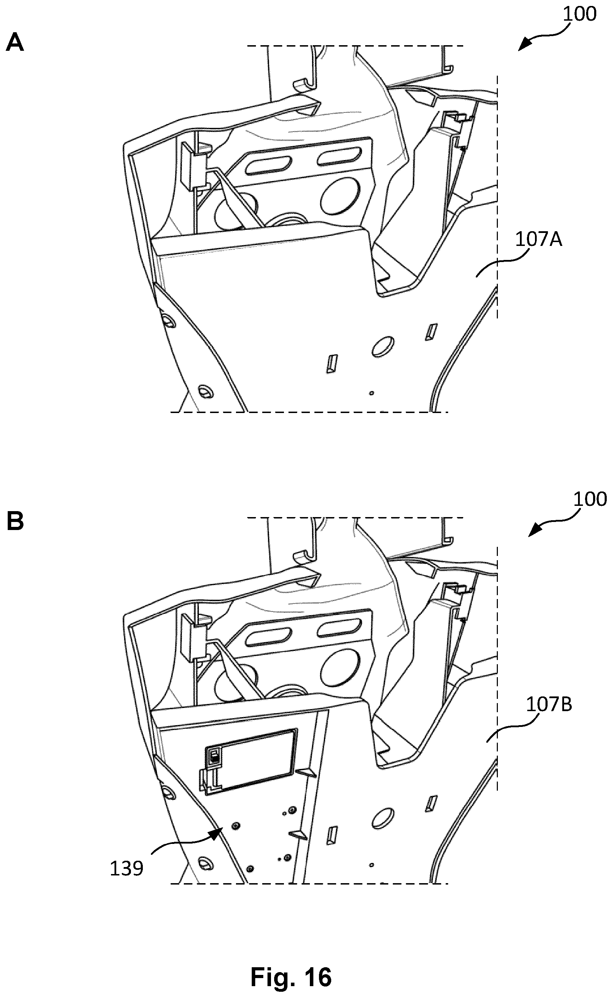

Figs. 16A and 16B schematically illustrates an exemplary manikin 100, respectively before and after being retrofitted with a sensor system in accordance with the method 2000.

The method 2000 comprises providing 2002 a replacement back portion comprising a sensor assembly, e.g. comprising the sensor module 138 and/or the power unit 136 of Fig. 3, comprising one or more sensors for measuring one or more parameters indicative of the performance of a trainee during use of the training manikin in a training session. At least part of the one or more parameters are indicative of deflection of the chest portion. The sensor assembly further comprises at least one processing device connected to the one or more sensors and adapted to provide one or more output signals based on the one or more parameters.

The method 2000 comprises removing 2004 the back portion of the training manikin, and after removing 2004 the back portion of the training manikin, attaching 2006 the replacement back portion to the training manikin. As shown in Figs. 16A and 16B, the back portion 107A of the manikin 100 in Fig. 16A has been replaced by replacement back portion 107B comprising the sensor assembly 139.

In some examples, the training manikin may comprise a mouth and/or nostrils and a lung portion comprising a lung bag and one or more airway components, including a mouth adaptor, fluidly connecting the lung bag with the mouth and/or the nostrils. In such examples, the method 2000 may comprise providing 2010 a replacement mouth adaptor having a side port, removing 2012 the mouth adaptor of the training manikin. After removing 2012 the mouth adaptor the method 2000 may comprise attaching 2014 the replacement mouth adaptor, and fluidly connecting 2016 a pressure sensor of the one or more sensors with a sensor tube to the side port of the replacement mouth adaptor.

Alternatively, the method 2000 may comprise providing 2020 a side port adapter having a side port, cutting 2022 the airway tube of the training manikin to form a first airway tube part and a second airway tube part (see Fig. 9). After cutting 2022 the airway tube, the method 2000 may comprise inserting 2024 the side port adaptor between the first airway tube part and the second airway tube part, and fluidly connecting 2026 the pressure sensor of the one or more sensors with a sensor tube to the side port of the side port adaptor.

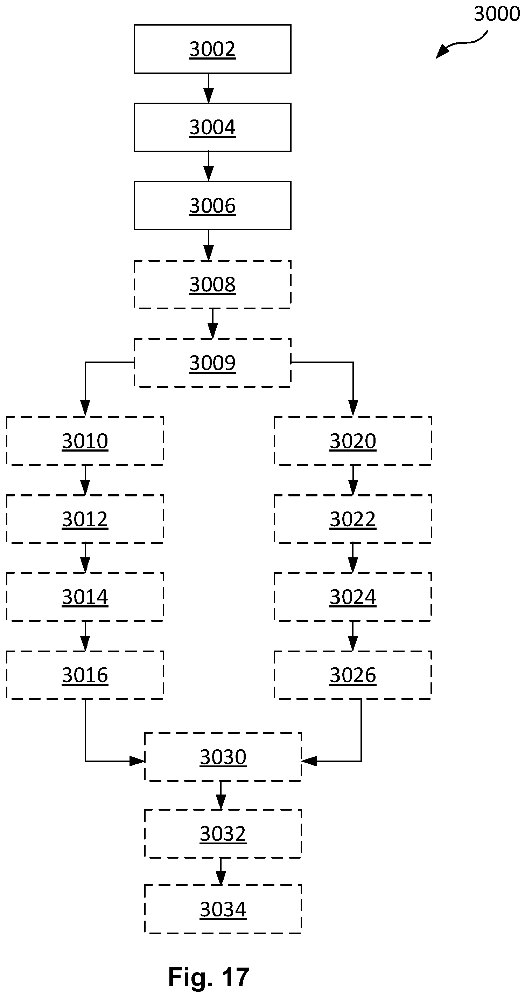

Fig. 17 is a block diagram of an exemplary method 3000 for retrofitting a sensor system on a training manikin for practicing CPR. For example, the method 3000 may be used to fit a sensor system to a manikin without measurement capabilities to obtain a manikin as described with respect to the previous figures. Particularly, the method 3000 is for retrofitting a sensor system on a training manikin comprising a chest portion and a back portion, and wherein the chest portion is deflectable, e.g. during compression training, along a deflection direction and towards the back portion between a non-deflected chest position and a maximum-deflected chest position. The training manikin may further comprise a surface element forming an outside surface of at least part of the training manikin.

The method 3000 comprises providing 3002 a sensor assembly, e.g. comprising the sensor module 138 and/or the power unit 136 of Fig. 3, comprising one or more sensors for measuring one or more parameters indicative of the performance of a trainee during use of the training manikin in a training session. At least part of the one or more parameters are indicative of deflection of the chest portion. The sensor assembly further comprises at least one processing device connected to the one or more sensors and adapted to provide one or more output signals based on the one or more parameters.

The method 3000 comprises removing 3004 the surface element of the training manikin, and after removing 3004 the surface element of the training manikin, attaching 3006 the sensor assembly to a sensor position internal of the training manikin.

The method 3000 may further comprise providing 3008 a reflector, and attaching 3009 the reflector to an internal chest support structure of the chest portion of the manikin.

In some examples, the training manikin may comprise a mouth and/or nostrils and a lung portion comprising a lung bag and one or more airway components, including a mouth adaptor, fluidly connecting the lung bag with the mouth and/or the nostrils. In such examples, the method 3000 may comprise providing 3010 a replacement mouth adaptor having a side port, removing 3012 the mouth adaptor of the training manikin. After removing 3012 the mouth adaptor the method 3000 may comprise attaching 3014 the replacement mouth adaptor, and fluidly connecting 3016 a pressure sensor of the one or more sensors with a sensor tube to the side port of the replacement mouth adaptor.

Alternatively, the method 3000 may comprise providing 3020 a side port adapter having a side port, cutting 3022 the airway tube of the training manikin to form a first airway tube part and a second airway tube part (see Fig. 9). After cutting 3022 the airway tube, the method 3000 may comprise inserting 3024 the side port adaptor between the first airway tube part and the second airway tube part, and fluidly connecting 3026 the pressure sensor of the one or more sensors with a sensor tube to the side port of the side port adaptor.

The method 3000 may comprise providing 3030 a replacement surface element comprising a battery holder, electrically connecting 3032 the sensor assembly and the battery holder of the replacement surface element, and attaching 3034 the replacement surface element to the training manikin.

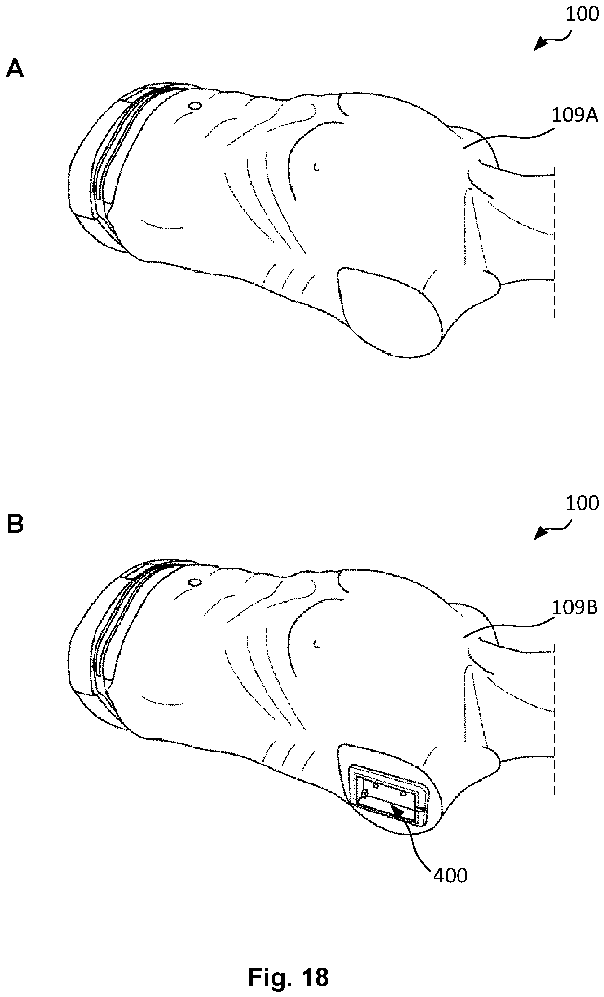

Figs. 18A and 18B schematically illustrates an exemplary manikin 100, respectively before and after replacing the surface element 109A with the replacement surface element 109B comprising the battery holder 400.

The disclosure has been described with reference to preferred embodiments. However, the scope of the invention is not limited to the illustrated embodiments, and alterations and modifications can be carried out without deviating from the scope of the invention.

Throughout the description, the use of the terms "first", "second", "third", "fourth", "primary", "secondary", "tertiary" etc. does not imply any particular order or importance, but are included to identify individual elements. Furthermore, the labelling of a first element does not imply the presence of a second element and vice versa.

### LIST OF REFERENCES

- 2: system
- 10: deflection direction
- 12: hinge axis
- 100, 100', 100": manikin
- 102: head
- 103: torso
- 104: chest portion
- 105: mouth
- 106: nostrils
- 107: back portion
- 108: compression spring
- 109: surface element
- 110: internal chest support structure
- 112: compression sensor
- 114: ventilation sensor
- 120: wireless communication module
- 130: processing device
- 134: electronic memory
- 136: power unit
- 138: sensor module
- 139: sensor assembly
- 140: lung portion
- 142: lung bag
- 144: airway component
- 146: airway tube
- 148: side port
- 150: side port adaptor
- 200: first client device
- 202: display
- 204: client wireless communication module
- 210: second client device
- 212: display
- 214: client wireless communication module
- 220: further second client device
- 222: display
- 300: optical distance sensor
- 302: sensor position
- 304: internal chest distance
- 306: reflector
- 310: block element
- 312: hole
- 314: first block side
- 316: second block side
- 318: cover element
- 319: opening
- 320: reinforcement part
- 330: reflector assembly
- 332: reflector hinge
- 334: reflector attachment part
- 336: engagement element
- 338: biasing element
- 350: pressure sensor
- 352: sensor tube
- 400: battery holder
- 402: battery compartment
- 404: cover portion
- 406: first side
- 408: second side
- 410: on/off actuator
- 412: battery holder thickness
- 420: recess
- 430: surface part
- 432: opening
- 434: boundary portion
- 440: first mounting element
- 442: first rim portion
- 443: first primary plane
- 444: first lower portion
- 445: first secondary plane
- 446: first distance
- 450: second mounting element
- 452: second rim portion
- 454: second lower portion
- 456: second distance
- 460: fastening element
- 1000: method
- 1002: providing training manikin
- 1004: starting training session
- 1006: measuring parameter(s)
- 1007: obtaining compression signal
- 1008: providing compression signal
- 1012: measuring during a baseline period
- 1014: obtaining baseline value(s)
- 1015: obtaining ventilation signal
- 1016: providing ventilation signal
- 2000: method
- 2002: providing replacement back portion
- 2004: removing back portion
- 2006: attaching replacement back portion
- 2010: providing replacement mouth adaptor
- 2012: removing mouth adaptor
- 2014: attaching replacement mouth adaptor
- 2016: connecting pressure sensor
- 2020: providing side port adaptor
- 2022: cutting airway tube
- 2024: inserting side port adaptor
- 2026: connecting pressure sensor
- 3000: method
- 3002: providing sensor assembly
- 3004: removing surface element
- 3006: attaching sensor assembly
- 3008: providing reflector
- 3009: attaching reflector
- 3010: providing replacement mouth adaptor
- 3012: removing mouth adaptor
- 3014: attaching replacement mouth adaptor
- 3016: connecting pressure sensor
- 3020: providing side port adaptor
- 3022: cutting airway tube
- 3024: inserting side port adaptor
- 3026: connecting pressure sensor
- 3030: providing replacement surface element
- 3032: electrically connecting sensor assembly and battery holder
- 3034: attaching replacement surface element

## Claims

1. A training manikin (100, 100', 100") for practicing CPR comprising:
- a chest portion (104) and a back portion (107), and wherein the chest portion is deflectable along a deflection direction and towards the back portion between a non-deflected chest position and a maximum-deflected chest position,
- one or more sensors (112, 114) for measuring one or more parameters indicative of the performance of a trainee during use of the training manikin in a training session, wherein at least part of the one or more parameters are indicative of deflection of the chest portion,
- at least one processing device (130) connected to the one or more sensors and adapted to provide one or more output signals based on the one or more parameters, the one or more output signals comprising a compression signal indicative of deflection of the chest portion,
wherein the training manikin (100, 100', 100") comprises a mouth (105) and/or nostrils (106) and a lung portion (140) comprising a lung bag (142) and one or more airway components (144) fluidly connecting the lung bag with the mouth and/or the nostrils, and wherein at least part of the one or more parameters are indicative of ventilation of the lung portion and the one or more output signals comprising a ventilation signal indicative of ventilation of the lung portion,
**characterised in that** the one or more sensors (112, 114) comprises a temperature sensor (356) measuring temperature, and wherein the temperature sensor provides a temperature sensor signal indicative of the measured temperature to the processing device, and wherein the ventilation signal is based on the temperature sensor signal.

2. Training manikin according to claim 1, wherein the one or more sensors comprises an optical distance sensor arranged at a sensor position and measuring an internal chest distance between the optical distance sensor and a reflector, wherein the reflector moves with the chest portion during deflection of the chest portion, wherein the optical distance sensor provides a distance sensor signal indicative of the measured internal chest distance to the processing device, and wherein the compression signal is based on the distance sensor signal.

3. Training manikin according to claim 2, wherein the optical distance sensor is attached to the back portion.

4. Training manikin according to any of the preceding claims 2-3, wherein the optical distance sensor comprises a Time of Flight (ToF) sensor.

5. Training manikin according to any of the preceding claims 2-4, comprising an internal block element with a hole therethrough from a first block side to a second block side, the internal block element being arranged between the sensor position and the reflector, wherein the hole is arranged to provide a visible path between the optical distance sensor and the reflector, the first block side being arranged towards the sensor position and the second block side being arranged towards the reflector.

6. Training manikin according to claim 5, wherein the internal block element is enclosed by a cover element having an opening exposing the hole of the internal block element on the first block side, and the cover element covering the hole of the internal block element on the second block side and forming the reflector.

7. Training manikin according to any of the preceding claims 2-6 comprising a compression spring biasing the chest portion towards the non-deflected chest position, and wherein the chest portion comprises an internal chest support structure in engagement with the compression spring.

8. Training manikin according to any of the preceding claims 2-7, wherein the processing device is adapted to filter the distance sensor signal, e.g. by applying one or more filters, e.g. one or more finite impulse response (FIR) filters, to obtain a filtered distance signal, and wherein the compression signal is based on the filtered distance signal.

9. Training manikin according to claim 8, wherein filtering the distance sensor signal comprises determining a rate of change of the distance sensor signal, in accordance with the rate of change of the distance sensor signal being above a high threshold applying a first filter on the distance sensor signal, wherein the first filter is based on a first number of sampling points of the distance sensor signal, in accordance with the rate of change of the distance sensor signal being below a low threshold applying a second filter on the distance sensor signal, wherein the second filter is based on a second number of sampling points of the distance sensor signal.

10. Training manikin according to claim 9, wherein the second number of sampling points is higher than the first number of sampling points.

11. Training manikin according to any of claims 9 or 10, wherein filtering the distance sensor signal comprises, in accordance with the rate of change of the distance sensor signal being below the high threshold and above the low threshold, applying a combination of both the first filter and the second filter on the distance sensor signal.

12. Training manikin according to any of the preceding claims 2-11, wherein the compression signal is based on a compression baseline value, wherein the compression baseline value is based on measurement of at least part of the one or more parameters during a compression baseline period.

13. Training manikin according to any of the preceding claims 2-12, wherein the compression signal is indicative of distance of deflection of the chest portion relative to the non-deflected chest position.

14. Training manikin according to any of the preceding claims, wherein the one or more sensors comprises a pressure sensor measuring air pressure in the lung portion, and wherein the pressure sensor provides a pressure sensor signal indicative of the measured air pressure in the lung portion to the processing device, and wherein the ventilation signal is based on the pressure sensor signal.

15. Training manikin according to claim 14, wherein the pressure sensor is fluidly connected with a sensor tube to a side port of the one or more airway components.

16. Training manikin according to any of the preceding claims, wherein the ventilation signal is indicative of volume of air contained in the lung portion.

17. Training manikin according to claim 16, wherein the ventilation signal is based on a conversion, using an nth order polynomial equation, of one or more measured air pressure parameters of the one or more parameters, optionally wherein n is between 1 and 5, such as between 2 and 4, such as 3.

18. Training manikin according to claim 17, wherein the nth order polynomial equation is empirically established by inflating lung portions of a plurality of manikins of the same type as the training manikin with a known volume of air and measuring the resulting pressure.

19. Training manikin according to any of the preceding claims, wherein the ventilation signal is based on a baseline ventilation value, wherein the baseline ventilation value is based on measurement of at least part of the one or more parameters during a ventilation baseline period.

20. Training manikin according to any of the preceding claims, wherein the training manikin comprises an electronic memory connected with the at least one processing device, the electronic memory storing a type parameter indicative of a first type of training manikin selected from a plurality of types of training manikins, and wherein the compression signal is based on the type parameter and/or wherein the ventilation signal is based on the type parameter.

21. Method (1000) for registering performance of a trainee during practice of CPR, the method comprising:
- providing (1002) a training manikin comprising a chest portion and a back portion, and wherein the chest portion is deflectable along a deflection direction and towards the back portion between a non-deflected chest position and a maximum-deflected chest position, the training manikin further comprising a mouth and/or nostrils and a lung portion comprising a lung bag and one or more airway components fluidly connecting the lung bag with the mouth and/or the nostrils, the training manikin further comprising one or more sensors for measuring one or more parameters indicative of the performance of a trainee during use of the training manikin in a training session, wherein at least part of the one or more parameters are indicative of deflection of the chest portion, and wherein at least part of the one or more parameters are indicative of ventilation of the lung portion, and
- starting (1004) a training session,
the method being **characterized in that** it further comprises the steps of:
- measuring (1006) the one or more parameters with the one or more sensors during the training session wherein measuring the one or more parameters includes measuring temperature,
- providing (1008) a compression signal indicative of deflection of the chest portion based on the one or more parameters, and
- providing (1016) a ventilation signal indicative of ventilation of the lung portion based on the one or more parameters, wherein the ventilation signal is based on the measured temperature.

22. Method according to claims 21, wherein measuring the one or more parameters includes measuring an internal chest distance, and wherein the compression signal is based on the measured internal chest distance.

## Patentansprüche

1. Trainingspuppe (100, 100', 100") zum Üben von CPR, umfassend:
- einen Brustkorbabschnitt (104) und einen Rückenabschnitt (107), und wobei der Brustkorbabschnitt entlang einer Ablenkungsrichtung und in Richtung zu dem Rückenabschnitt zwischen einer nicht abgelenkten Brustkorbposition und einer maximal abgelenkten Brustkorbposition ablenkbar ist,
- einen oder mehrere Sensoren (112, 114) zum Messen eines oder mehrerer Parameter, die die Leistung eines Auszubildenden während der Verwendung der Trainingspuppe in einer Trainingseinheit angeben, wobei mindestens ein Teil des einen oder der mehreren Parameter eine Ablenkung des Brustkorbabschnitts angeben,
- mindestens eine Verarbeitungsvorrichtung (130), die mit dem einen oder den mehreren Sensoren verbunden ist und angepasst ist, um ein oder mehrere Ausgangssignale basierend auf dem einen oder den mehreren Parametern bereitzustellen, wobei das eine oder die mehreren Ausgangssignale ein Kompressionssignal umfassen, das eine Ablenkung des Brustkorbabschnitts angibt,
wobei die Trainingspuppe (100, 100', 100") einen Mund (105) und/oder Nasenlöcher (106) und einen Lungenabschnitt (140) umfasst, der einen Lungenbeutel (142) und eine oder mehrere Atemwegskomponenten (144) umfasst, die den Lungenbeutel mit dem Mund und/oder den Nasenlöchern fluidisch verbinden, und
wobei mindestens ein Teil des einen oder der mehreren Parameter die Ventilation des Lungenabschnitts angibt, und das eine oder die mehreren Ausgangssignale ein Ventilationssignal umfassen, das die Ventilation des Lungenabschnitts angibt,
**dadurch gekennzeichnet, dass** der eine oder die mehreren Sensoren (112, 114) einen Temperatursensor (356) umfassen, der die Temperatur misst, und wobei der Temperatursensor der Verarbeitungsvorrichtung ein Temperatursensorsignal bereitstellt, das die gemessene Temperatur angibt, und wobei das Ventilationssignal auf dem Temperatursensorsignal basiert.

2. Trainingspuppe nach Anspruch 1,
wobei der eine oder die mehreren Sensoren einen optischen Abstandssensor umfassen, der an einer Sensorposition angeordnet ist und einen inneren Brustkorbabstand zwischen dem optischen Abstandssensor und einem Reflektor misst,
wobei sich der Reflektor bei der Ablenkung des Brustkorbabschnitts mit dem Brustkorbabschnitt bewegt,
wobei der optische Abstandssensor der Verarbeitungsvorrichtung ein Abstandssensorsignal bereitstellt, das den gemessenen inneren Brustkorbabstand angibt, und
wobei das Kompressionssignal auf dem Abstandssensorsignal basiert.

3. Trainingspuppe nach Anspruch 2, der optische Abstandssensor am Rückenabschnitt angebracht ist.

4. Trainingspuppe nach einem der vorstehenden Ansprüche 2-3, wobei der optische Abstandssensor einen Laufzeitsensor (ToF-Sensor) umfasst.

5. Trainingspuppe nach einem der vorstehenden Ansprüche 2-4, umfassend ein inneres Blockelement mit einem Loch, das von einer ersten Blockseite zu einer zweiten Blockseite dort hindurchgeht, wobei das innere Blockelement zwischen der Sensorposition und dem Reflektor angeordnet ist,
wobei das Loch angeordnet ist, um einen sichtbaren Pfad zwischen dem optischen Abstandssensor und dem Reflektor bereitzustellen, wobei die erste Blockseite in Richtung zu der Sensorposition angeordnet ist und die zweite Blockseite in Richtung zu dem Reflektor angeordnet ist.

6. Trainingspuppe nach Anspruch 5, wobei das innere Blockelement von einem Abdeckelement umschlossen ist, das eine Öffnung aufweist, die das Loch des inneren Blockelements auf der ersten Blockseite freilegt, und wobei das Abdeckelement das Loch des inneren Blockelements auf der zweiten Blockseite abdeckt und den Reflektor bildet.

7. Trainingspuppe nach einem der vorstehenden Ansprüche 2-6, umfassend eine Druckfeder, die den Brustkorbabschnitt in Richtung zu der nicht abgelenkten Brustkorbposition vorspannt, und wobei der Brustbereich eine innere Brustkorbstützstruktur umfasst, die mit der Druckfeder in Eingriff steht.

8. Trainingspuppe nach einem der vorstehenden Ansprüche 2-7, wobei die Verarbeitungsvorrichtung angepasst ist, um das Abstandssensorsignal zu filtern, z. B. durch Anwenden eines oder mehrerer Filter, z. B. eines oder mehrerer Filter mit endlicher Impulsantwort (FIR), um ein gefiltertes Abstandssignal zu erhalten, und wobei das Kompressionssignal auf dem gefilterten Abstandssignal basiert.

9. Trainingspuppe nach Anspruch 8,
wobei das Filtern des Abstandssensorsignals ein Bestimmen einer Änderungsrate des Abstandssensorsignals umfasst und, in Übereinstimmung damit, dass die Änderungsrate des Abstandssensorsignals über einem hohen Schwellenwert liegt, ein Anwenden eines ersten Filters auf das Abstandssensorsignal umfasst,
wobei der erste Filter auf einer ersten Anzahl von Abtastpunkten des Abstandssensorsignals basiert, und in Übereinstimmung damit, dass die Änderungsrate des Abstandssensorsignals unter einem niedrigen Schwellenwert liegt, ein Anwenden eines zweiten Filters auf das Abstandssensorsignal umfasst,
wobei der zweite Filter auf einer zweiten Anzahl von Abtastpunkten des Abstandssensorsignals basiert.

10. Trainingspuppe nach Anspruch 9, wobei die zweite Anzahl von Abtastpunkten höher ist als die erste Anzahl von Abtastpunkten.

11. Trainingspuppe nach einem der Ansprüche 9 oder 10, wobei das Filtern des Abstandssensorsignals in Übereinstimmung damit, dass die Änderungsrate des Abstandssensorsignals unter dem hohen Schwellenwert und über dem niedrigen Schwellenwert liegt, ein Anwenden einer Kombination von dem ersten Filter und dem zweiten Filter auf das Abstandssensorsignal umfasst.

12. Trainingspuppe nach einem der vorstehenden Ansprüche 2-11, wobei das Kompressionssignal auf einem Kompressionsbasiswert basiert, wobei der Kompressionsbasiswert auf der Messung von mindestens einem Teil des einen oder der mehreren Parameter während einer Kompressionsbasisperiode basiert.

13. Trainingspuppe nach einem der vorstehenden Ansprüche 2-12, wobei das Kompressionssignal den Abstand der Ablenkung des Brustkorbbereichs relativ zur nicht abgelenkten Brustkorbposition angibt.

14. Trainingspuppe nach einem der vorstehenden Ansprüche, wobei der eine oder die mehreren Sensoren einen Drucksensor umfassen, der den Luftdruck im Lungenabschnitt misst, und wobei der Drucksensor der Verarbeitungsvorrichtung ein Drucksensorsignal bereitstellt, das den gemessenen Luftdruck im Lungenabschnitt angibt, und wobei das Ventilationssignal auf dem Drucksensorsignal basiert.

15. Trainingspuppe nach Anspruch 14, wobei der Drucksensor über einen Sensorschlauch mit einem Seitenanschluss der einen oder der mehreren Atemwegskomponenten fluidisch verbunden ist.

16. Trainingspuppe nach einem der vorstehenden Ansprüche, wobei das Ventilationssignal ein Indikator für das im Lungenabschnitt enthaltene Luftvolumen angibt.

17. Trainingspuppe nach Anspruch 16, wobei das Ventilationssignal auf einer Umwandlung eines oder mehrerer gemessener Luftdruckparameter des einen oder der mehreren Parameter unter Verwendung einer Polynomgleichung n-ter Ordnung basiert, optional wobei n zwischen 1 und 5, wie zwischen 2 und 4, liegt und beispielsweise 3 ist.

18. Trainingspuppe nach Anspruch 17, die Polynomgleichung n-ter Ordnung empirisch ermittelt wird, indem die Lungenabschnitte einer Vielzahl von Puppen des gleichen Typs wie die Trainingspuppe mit einem bekannten Luftvolumen aufgeblasen werden und der resultierende Druck gemessen wird.

19. Trainingspuppe nach einem der vorstehenden Ansprüche, wobei das Ventilationssignal auf einem Ventilationsbasiswert basiert, wobei der Ventilationsbasiswert auf der Messung von mindestens einem Teil des einen oder der mehreren Parameter während einer Ventilationsbasisperiode basiert.

20. Trainingspuppe nach einem der vorstehenden Ansprüche,
wobei die Trainingspuppe einen elektronischen Speicher umfasst, der mit der mindestens einen Verarbeitungsvorrichtung verbunden ist, wobei der elektronische Speicher einen Typparameter speichert, der einen ersten Typ einer Trainingspuppe angibt, der aus einer Vielzahl von Typen von Trainingspuppen ausgewählt ist, und wobei das Kompressionssignal auf dem Typparameter basiert und/oder wobei das Ventilationssignal auf dem Typparameter basiert.

21. Verfahren (1000) zum Registrieren einer Leistung eines Auszubildenden während des Übens von CPR, das Verfahren umfassend:
- Bereitstellen (1002) einer Trainingspuppe, die einen Brustkorbabschnitt und einen Rückenabschnitt umfasst, und wobei der Brustkorbabschnitt entlang einer Ablenkungsrichtung und in Richtung zu dem Rückenabschnitt zwischen einer nicht abgelenkten Brustkorbposition und einer maximal abgelenkten Brustkorbposition ablenkbar ist,
wobei die Trainingspuppe weiter einen Mund und/oder Nasenlöcher und einen Lungenabschnitt umfasst, der einen Lungenbeutel und eine oder mehrere Atemwegskomponenten umfasst, die den Lungenbeutel mit dem Mund und/oder den Nasenlöchern fluidisch verbinden,
wobei die Trainingspuppe weiter einen oder mehrere Sensoren zum Messen eines oder mehrerer Parameter, die die Leistung eines Auszubildenden während der Verwendung der Trainingspuppe in einer Trainingseinheit angeben, umfasst,
wobei mindestens ein Teil des einen oder der mehreren Parameter eine Ablenkung des Brustkorbabschnitts angeben, und wobei mindestens ein Teil des einen oder der mehreren Parameter eine Ventilation des Lungenabschnitts angeben, und
- Starten (1004) einer Trainingseinheit,
wobei das Verfahren **dadurch gekennzeichnet ist, dass** es weiter die Schritte umfasst von:
- Messen (1006) des einen oder der mehreren Parameter mit dem einen oder den mehreren Sensoren während der Trainingseinheit, wobei das Messen des einen oder der mehreren Parameter ein Messen der Temperatur einschließt,
- Bereitstellen (1008) eines Kompressionssignals, das die Ablenkung des Brustkorbabschnitts basierend auf dem einen oder den mehreren Parameter angibt, und
- Bereitstellen (1016) eines Ventilationssignals, das die Ventilation des Lungenabschnitts basierend auf dem einen oder den mehreren Parameter angibt, wobei das Ventilationssignal auf der gemessenen Temperatur basiert.

22. Verfahren nach Anspruch 21, wobei das Messen des einen oder der mehreren Parameter ein Messen eines inneren Brustkorbabstands einschließt, und wobei das Kompressionssignal auf dem gemessenen inneren Brustkorbabstand basiert.

## Revendications

1. Mannequin de formation (100, 100', 100") à la pratique de RCP (réanimation cardiopulmonaire) comprenant :
- une portion de poitrine (104) et une portion de dos (107), et dans lequel la portion de poitrine peut être déviée le long d'une direction de déviation et vers la portion de dos entre une position de poitrine non déviée et une position de poitrine déviée au maximum,
- un ou plusieurs capteurs (112, 114) pour mesurer un ou plusieurs paramètres indiquant les performances d'un stagiaire pendant l'utilisation du mannequin de formation dans une session de formation, dans lequel au moins une partie des un ou plusieurs paramètres indiquent une déviation de la portion de poitrine,
- au moins un dispositif de traitement (130) connecté aux un ou plusieurs capteurs et adapté à fournir un ou plusieurs signaux de sortie sur la base des un ou plusieurs paramètres, les un ou plusieurs signaux de sortie comprenant un signal de compression indiquant une déviation de la portion de poitrine,
dans lequel le mannequin de formation (100, 100', 100") comprend une bouche (105) et/ou des narines (106) et une portion pulmonaire (140) comprenant un sac pulmonaire (142) et un ou plusieurs composants de voies aériennes (144) connectant de manière fluidique le sac pulmonaire à la bouche et/ou aux narines, et dans lequel au moins une partie des un ou plusieurs paramètres indiquent une ventilation de la portion pulmonaire et les un ou plusieurs signaux de sortie comprenant un signal de ventilation indiquant une ventilation de la portion pulmonaire,
**caractérisé en ce que** les un ou plusieurs capteurs (112, 114) comprennent un capteur de température (356) mesurant la température, et dans lequel le capteur de température fournit un signal de capteur de température indiquant la température mesurée au dispositif de traitement, et dans lequel le signal de ventilation est basé sur le signal de capteur de température.

2. Mannequin de formation selon la revendication 1, dans lequel les un ou plusieurs capteurs comprennent un capteur de distance optique agencé au niveau d'une position de capteur et mesurant une distance de poitrine interne entre le capteur de distance optique et un réflecteur, dans lequel le réflecteur se déplace avec la portion de poitrine pendant la déviation de la portion de poitrine, dans lequel le capteur de distance optique fournit un signal de capteur de distance indiquant au dispositif de traitement la distance de poitrine interne mesurée, et dans lequel le signal de compression est basé sur le signal de capteur de distance.

3. Mannequin de formation selon la revendication 2, dans lequel le capteur de distance optique est attaché à la portion de dos.

4. Mannequin de formation selon l'une quelconque des revendications précédentes 2 à 3, dans lequel le capteur de distance optique comprend un capteur de temps de vol (ToF).

5. Mannequin de formation selon l'une quelconque des revendications précédentes 2 à 4, comprenant un élément de bloc interne avec un trou à travers celui-ci depuis un premier côté de bloc jusqu'à un second côté de bloc, l'élément de bloc interne étant agencé entre la position de capteur et le réflecteur, dans lequel le trou est agencé pour fournir un chemin visible entre le capteur de distance optique et le réflecteur, le premier côté de bloc étant agencé vers la position de capteur et le second côté de bloc étant agencé vers le réflecteur.

6. Mannequin de formation selon la revendication 5, dans lequel l'élément de bloc interne est entouré d'un élément de couvercle présentant une ouverture exposant le trou de l'élément de bloc interne sur le premier côté de bloc, et l'élément de couvercle recouvrant le trou de l'élément de bloc interne sur le second côté de bloc et formant le réflecteur.

7. Mannequin de formation selon l'une quelconque des revendications précédentes 2 à 6 comprenant un ressort de compression sollicitant la portion de poitrine vers la position de poitrine non déviée, et dans lequel la portion de poitrine comprend une structure de support de poitrine interne en engagement avec le ressort de compression.

8. Mannequin de formation selon l'une quelconque des revendications précédentes 2 à 7, dans lequel le dispositif de traitement est adapté à filtrer le signal de capteur de distance, par exemple en appliquant un ou plusieurs filtres, par exemple un ou plusieurs filtres à réponse impulsionnelle finie (RIF), pour obtenir un signal de distance filtré, et dans lequel le signal de compression est basé sur le signal de distance filtré.

9. Mannequin de formation selon la revendication 8, dans lequel le filtrage du signal de capteur de distance comprend la détermination d'un taux de variation du signal de capteur de distance, conformément au taux de variation du signal de capteur de distance qui est supérieur à un seuil élevé appliquant un premier filtre sur le signal de capteur de distance, dans lequel le premier filtre est basé sur un premier nombre de points d'échantillonnage du signal de capteur de distance, conformément au taux de variation du signal de capteur de distance qui est inférieur à un seuil bas appliquant un second filtre sur le signal de capteur de distance, dans lequel le second filtre est basé sur un second nombre de points d'échantillonnage du signal de capteur de distance.

10. Mannequin de formation selon la revendication 9, dans lequel le second nombre de points d'échantillonnage est supérieur au premier nombre de points d'échantillonnage.

11. Mannequin de formation selon l'une quelconque des revendications 9 ou 10, dans lequel le filtrage du signal de capteur de distance comprend, conformément au taux de variation du signal de capteur de distance qui est inférieur au seuil élevé et supérieur au seuil bas, l'application d'une combinaison à la fois du premier filtre et du second filtre sur le signal de capteur de distance.

12. Mannequin de formation selon l'une quelconque des revendications précédentes 2 à 11, dans lequel le signal de compression est basé sur une valeur de base de compression, dans lequel la valeur de base de compression est basée sur la mesure d'au moins une partie des un ou plusieurs paramètres pendant une période de base de compression.

13. Mannequin de formation selon l'une quelconque des revendications précédentes 2 à 12, dans lequel le signal de compression indique la distance de la déviation de la portion de poitrine par rapport à la position de poitrine non déviée.

14. Mannequin de formation selon l'une quelconque des revendications précédentes, dans lequel les un ou plusieurs capteurs comprennent un capteur de pression mesurant la pression d'air dans la portion pulmonaire, et dans lequel le capteur de pression fournit un signal de capteur de pression indiquant au dispositif de traitement la pression d'air mesurée dans la portion pulmonaire, et dans lequel le signal de ventilation est basé sur le signal de capteur de pression.

15. Mannequin de formation selon la revendication 14, dans lequel le capteur de pression est connecté de manière fluidique à un tube de capteur sur un orifice latéral des un ou plusieurs composants de voies aériennes.

16. Mannequin de formation selon l'une quelconque des revendications précédentes, dans lequel le signal de ventilation indique le volume d'air contenu dans la portion pulmonaire.

17. Mannequin de formation selon la revendication 16, dans lequel le signal de ventilation est basé sur une conversion, en utilisant une équation polynomiale de degré n, d'un ou plusieurs paramètres de pression d'air mesurés des un ou plusieurs paramètres, facultativement dans lequel n est compris entre 1 et 5, tel qu'entre 2 et 4, tel que 3.

18. Mannequin de formation selon la revendication 17, dans lequel l'équation polynomiale de degré n est établie de manière empirique en gonflant les portions pulmonaires d'une pluralité de mannequins du même type que le mannequin de formation avec un volume d'air connu et en mesurant la pression résultante.

19. Mannequin de formation selon l'une quelconque des revendications précédentes, dans lequel le signal de ventilation est basé sur une valeur de ventilation de base, dans lequel la valeur de ventilation de base est basée sur une mesure d'au moins une partie des un ou plusieurs paramètres pendant une période de base de ventilation.

20. Mannequin de formation selon l'une quelconque des revendications précédentes, dans lequel le mannequin de formation comprend une mémoire électronique connectée au au moins un dispositif de traitement, la mémoire électronique stockant un paramètre de type indiquant un premier type de mannequin de formation sélectionné parmi une pluralité de types de mannequins de formation, et dans lequel le signal de compression est basé sur le paramètre de type et/ou dans lequel le signal de ventilation est basé sur le paramètre de type.

21. Procédé (1000) destiné à enregistrer les performances d'un stagiaire pendant la pratique de RCP (réanimation cardiopulmonaire), le procédé comprenant les étapes consistant à :
- fournir (1002) un mannequin de formation comprenant une portion de poitrine et une portion de dos, et dans lequel la portion de poitrine peut être déviée le long d'une direction de déviation et vers la portion de dos entre une position de poitrine non déviée et une position de poitrine déviée au maximum, le mannequin de formation comprenant en outre une bouche et/ou des narines et une portion pulmonaire comprenant un sac pulmonaire et un ou plusieurs composants de voies aériennes connectant de manière fluidique le sac pulmonaire à la bouche et/ou aux narines, le mannequin de formation comprenant en outre un ou plusieurs capteurs pour mesurer un ou plusieurs paramètres indiquant les performances d'un stagiaire pendant l'utilisation du mannequin de formation dans une session de formation, dans lequel au moins une partie des un ou plusieurs paramètres indiquent une déviation de la portion de poitrine, et dans lequel au moins une partie des un ou plusieurs paramètres indiquent une ventilation de la portion pulmonaire, et
- démarrer (1004) une session de formation,
le procédé étant **caractérisé en ce qu'**il comprend en outre les étapes consistant à :
- mesurer (1006) les un ou plusieurs paramètres avec les un ou plusieurs capteurs pendant la session de formation dans lequel la mesure des un ou plusieurs paramètres inclut la mesure de la température,
- fournir (1008) un signal de compression indiquant une déviation de la portion de poitrine sur la base des un ou plusieurs paramètres, et
- fournir (1016) un signal de ventilation indiquant une ventilation de la portion pulmonaire sur la base des un ou plusieurs paramètres, dans lequel le signal de ventilation est basé sur la température mesurée.

22. Procédé selon les revendications 21, dans lequel la mesure des un ou plusieurs paramètres inclut la mesure d'une distance de poitrine interne, et dans lequel le signal de compression est basé sur la distance de poitrine interne mesurée.
